# EUROPEAN PATENT SPECIFICATION

(11) **EP 4 601 460 B1**
(45) Date of publication and mention of the grant of the patent: **02.09.2026**
(21) Application number: 23802318.8
(22) Date of filing: 06.10.2023
(51) Int. Cl.: A01J 25/00, A01J 27/04, A23C 19/00

(54) **AUTOMATIC MACHINE FOR PRODUCING MOZZARELLA BURRATA CHEESE, AND CORRESPONDING PRODUCTION PROCESS**
AUTOMATISCHE MASCHINE ZUR HERSTELLUNG VON MOZZARELLA BRATATA-KÄSE UND ENTSPRECHENDES HERSTELLUNGSVERFAHREN
MACHINE AUTOMATIQUE DE PRODUCTION DE FROMAGE DE TYPE BURRATA DE MOZZARELLA, ET PROCÉDÉ DE PRODUCTION CORRESPONDANT

(30) Priority: 11.10.2022 IT 202200020916
(43) Date of publication of application: 20.08.2025
(73) Proprietor: Prima S.r.l., 12033 Moretta (CN) (IT)
(72) Inventor: PANSA, Mattia, 12040 Genola(CN) (IT)
(74) Representative: Metroconsult Srl
(86) International application number: PCT/IB2023/060041
(87) International publication number: WO 2024/079587

(56) References cited:
- EP-A1- 3 451 823
- WO-A1-2021/094839
- IT-A1- 201800 001 009
- IT-A1- 201800 002 766

## Description

### Technical field of the invention

The present invention concerns, in general, the field of cheese production. More specifically, it relates to a novel and innovative fully-automated machine for producing the so-called "mozzarella burrata cheese", also briefly called "burrata", i.e. fresh "pasta filata" cheese, similar in shape to classic mozzarella, consisting of a sort of sack or pouch formed of stretched curd, internally containing a soft filling or cream, called stracciatella.

The present invention also relates to a corresponding process for producing mozzarella burrata cheese.

### State of the art

As is known, mozzarella burrata cheese is a fresh stuffed stretched-curd cheese similar to mozzarella, but softer and creamier, and is one of the most appreciated specialties of Apulia's dairy production.

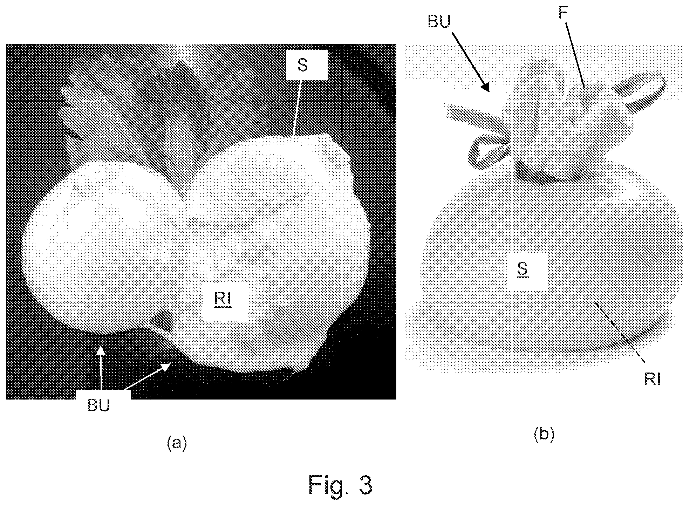

For clarity, the photographic image of Fig. 3 shows a typical mozzarella burrata cheese, designated as BU, consisting of a sack or pouch S, formed of stretched curd, and a filling RI of soft cream contained in the pouch S.

Nowadays, since it is a local specialty, burrata cheese is produced mostly by artisans through a series of manual operations, e.g. re-closing and sealing the top of the pouch S of pasta filata after stuffing it with the creamy filling RI.

Some attempts have been made to produce burrata cheese industrially, in line with the requirements of the dairy industry, i.e. by enforcing automation to eliminate many of the manual operations required for artisan preparation, particularly the step of re-closing the pouch at the top after stuffing it with the creamy filling.

In this regard, in particular, documents IT201800001009A1, EP3451823B1 and IT1361768 describe machines and plants for processing and producing pasta filata cheeses, which fall, in general at least, within the technical field of the present invention.

Notwithstanding such attempts, crowned with more or less success and generally directed towards industrial production of burrata cheese or other similar cheeses, the need is still felt in the dairy industry and market for machines, in particular for producing stuffed cheeses like burrata cheese, which can provide some improvements over those currently in use, including a higher level of automation and higher productivity, so as to contribute to making this special type of cheese, i.e. burrata cheese, even more desirable and appreciated on the consumer market, also in terms of profits and costs.

In the above-described context, therefore, the inventor(s) of the present invention perceived that it was possible to surpass the known techniques, and in particular to continue and complete the automation of the burrata cheese production process while still maintaining a high level of product quality, so as to fully meet the requirements of both the dairy industry and the consumer market.

### Summary of the invention

It follows that a first object of the present invention is to propose and provide a novel machine for burrata cheese production which surpasses the prior-art solutions briefly illustrated above, and which, in particular, permits a more efficient and automatic production of burrata cheese by eliminating most human interventions.

A second object of the present invention is to keep pace with industrial evolution, which, also in the dairy and cheese industry, is urgently demanding for increasingly automated and productive machines.

It is a further object of the present invention to provide a machine for burrata cheese production which is competitive in terms of costs, so that it can be a valid alternative, even from an economical viewpoint, to the machines currently employed in the industry for producing burrata cheese or other similar stuffed cheeses.

Yet another object of the present invention, which is connected to those described above, is to propose and provide a machine for burrata cheese production which can be configured and expanded into various models having different production capacities, so that it can be adapted to different needs as to the volumes and numbers of burrata cheese units to be produced.

Such objects are fully achieved by the machine for burrata cheese production having the features set out in the independent main claim 1, as well as by the process for burrata cheese production set out in the independent claim 8.

Particular embodiments of the machine for burrata cheese production and of the corresponding process for burrata cheese production according to the invention are set out in the dependent claims.

### Advantages of the invention

As will become apparent in light of the following description, the novel machine for burrata cheese production according to the present invention and the corresponding production process offer several important and exclusive advantages, some of which have already been mentioned above, including, merely by way of example, the following:
- full automation of "burrata cheese" production, with no manual intervention required;
- high productivity of the machine, significantly reducing the costs incurred for producing burrata cheese;
- high quality of the final product, i.e. burrata cheese, obtained by using the machine;
- exact and precise dosing of the filling for stuffing the mozzarella balls;
- machine prearranged for automatic on-site washing and sanitization, or CIP (Cleaning In Place);
- longer shelf life of the produced burrata cheeses, thanks to the elimination of all manual handling of the same by an operator and to CIP washing of the production machine;
- shorter production times, preventing the stretched curd used for preparing the burrata cheese from losing moisture, and hence yield;
- efficient and orderly discharge of the formed burrata cheeses from the machine, in particular for arranging them to be cooled and packaged, possibly automatically, and then marketed;
- possibility of configuring and expanding the machine for burrata cheese production according to market demand and specific production needs;
- robust machine construction, requiring simple and inexpensive maintenance;
- low machine production cost, which is anyway fully compatible with the market of machines and equipment for the dairy industry.

### Brief description of the drawings

These and other objects, features and advantages of the present invention will become apparent in light of the following description of a preferred embodiment thereof, provided herein merely by way of non-limiting example with reference to the annexed drawings, wherein:

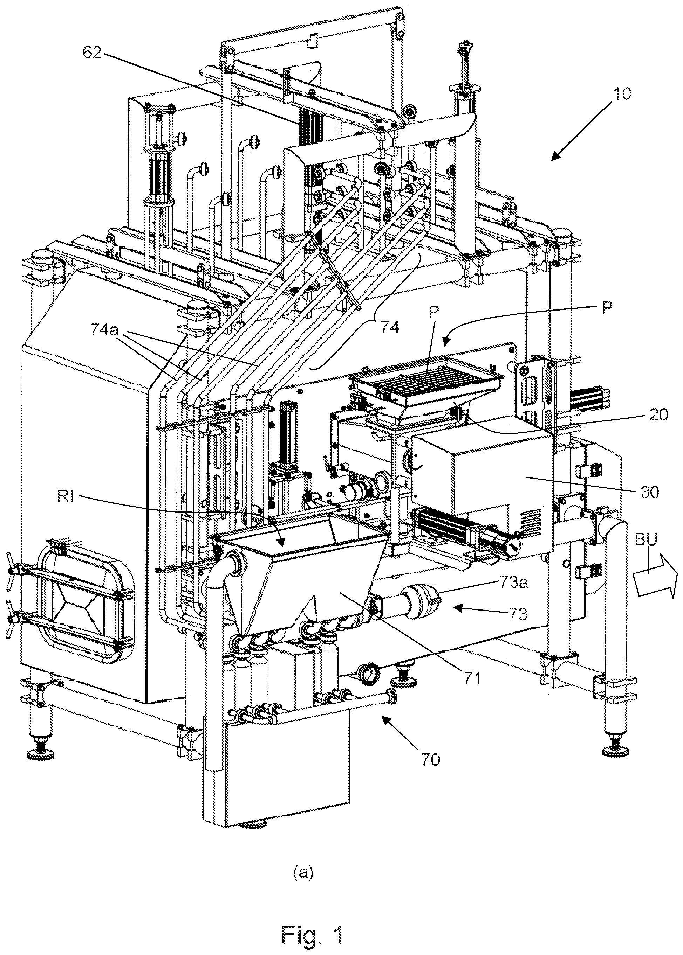

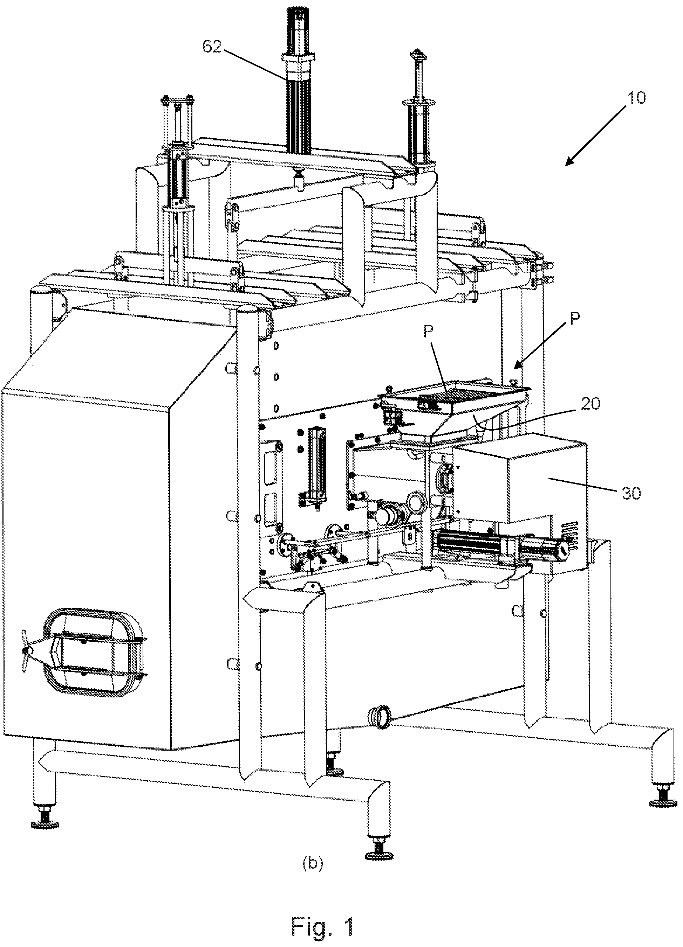

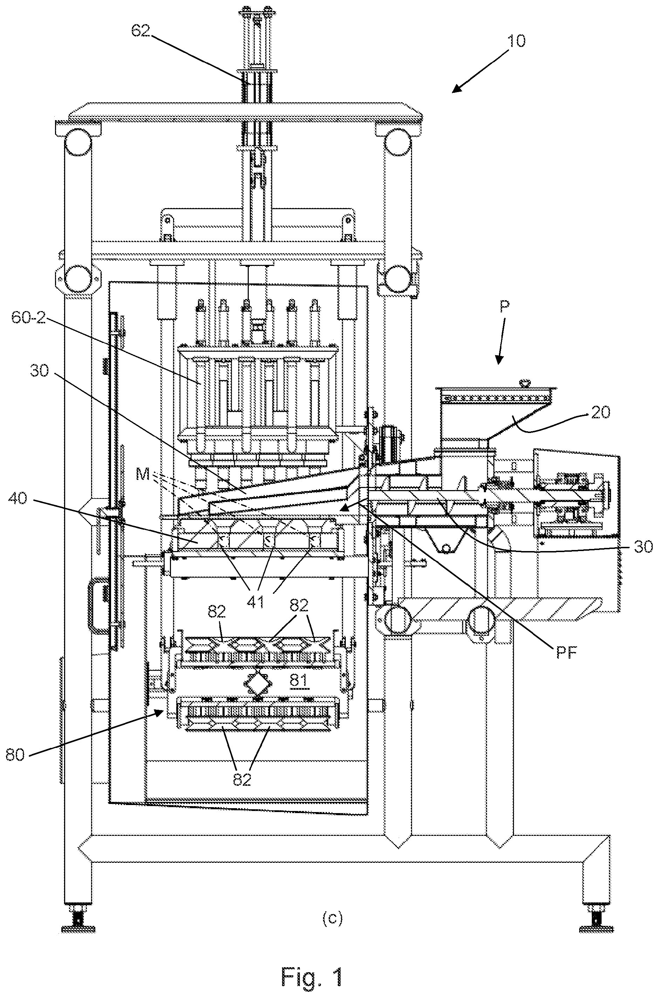

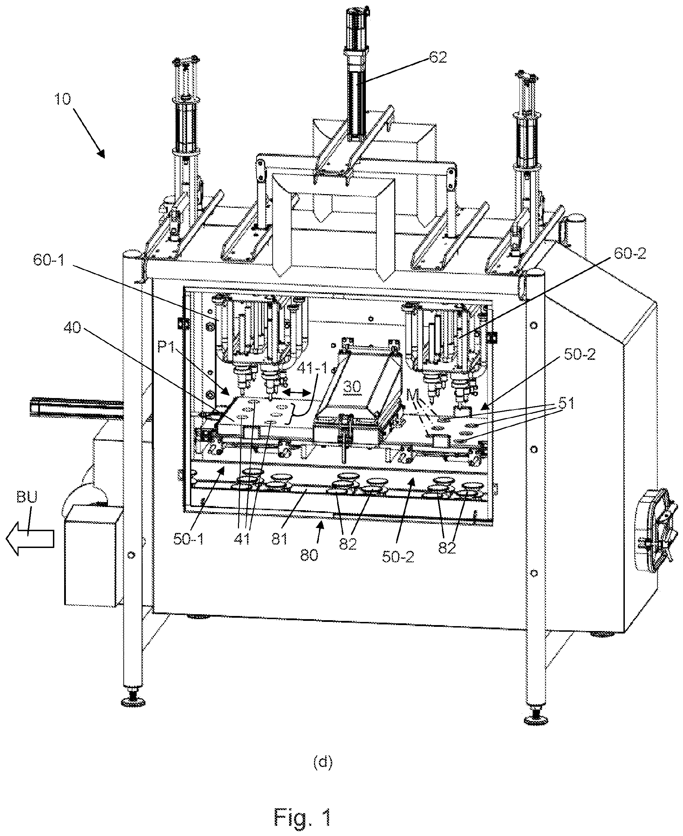

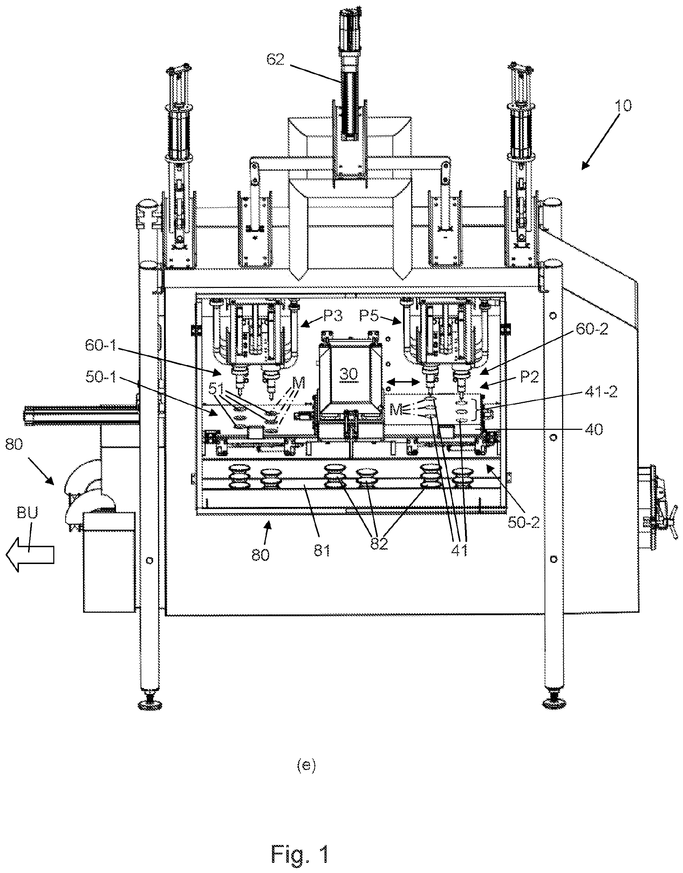

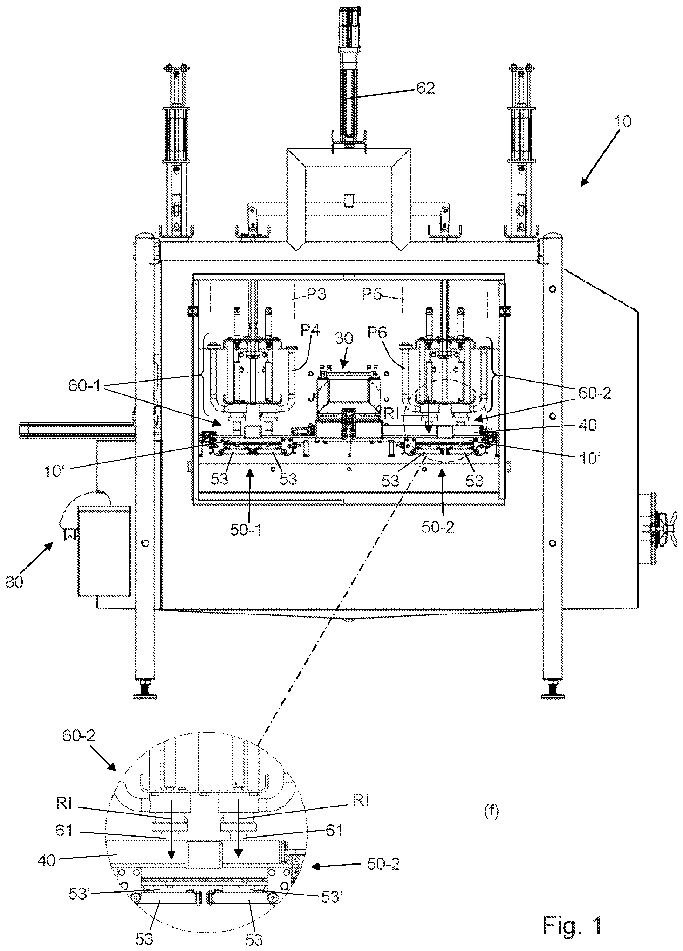

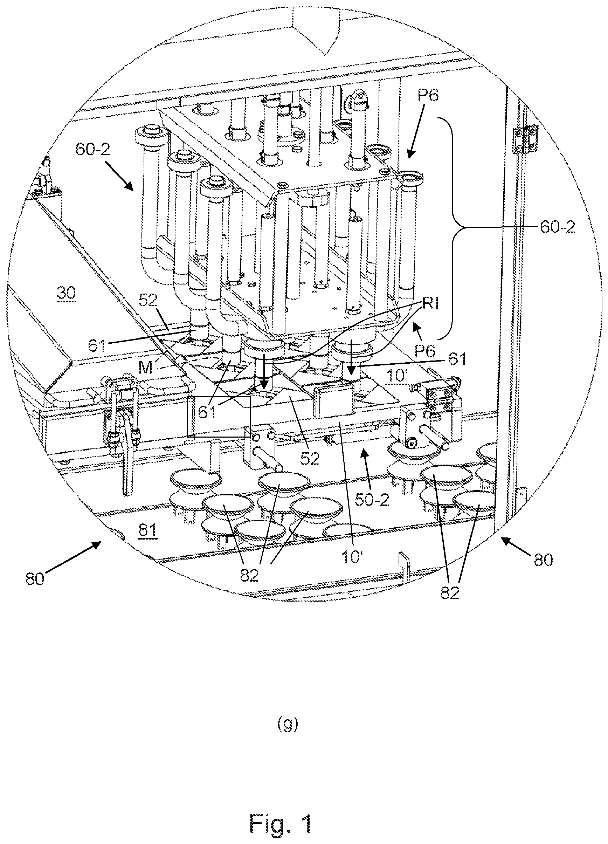

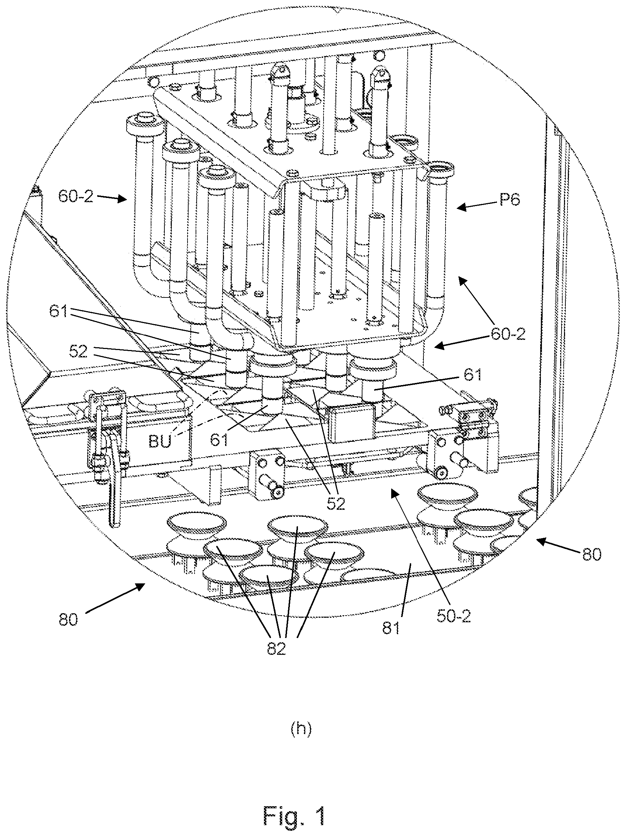

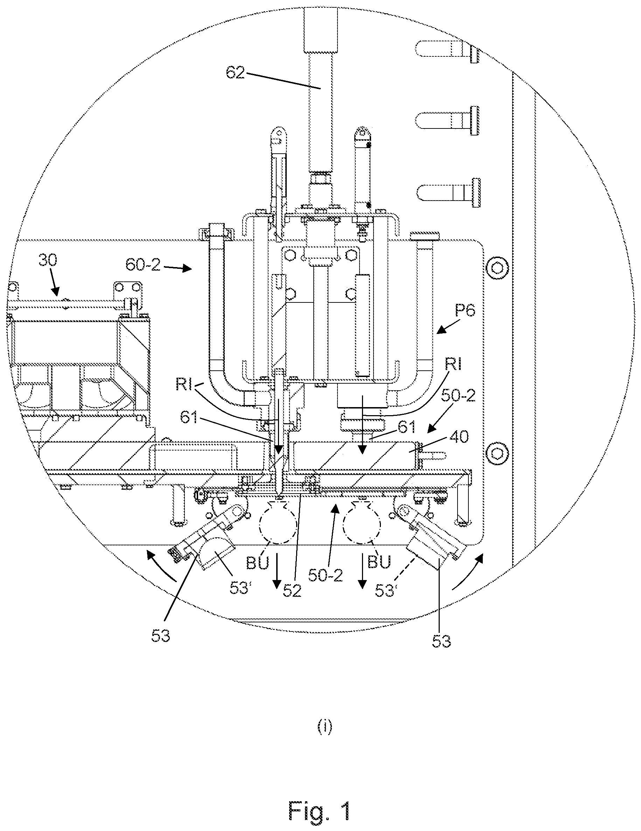

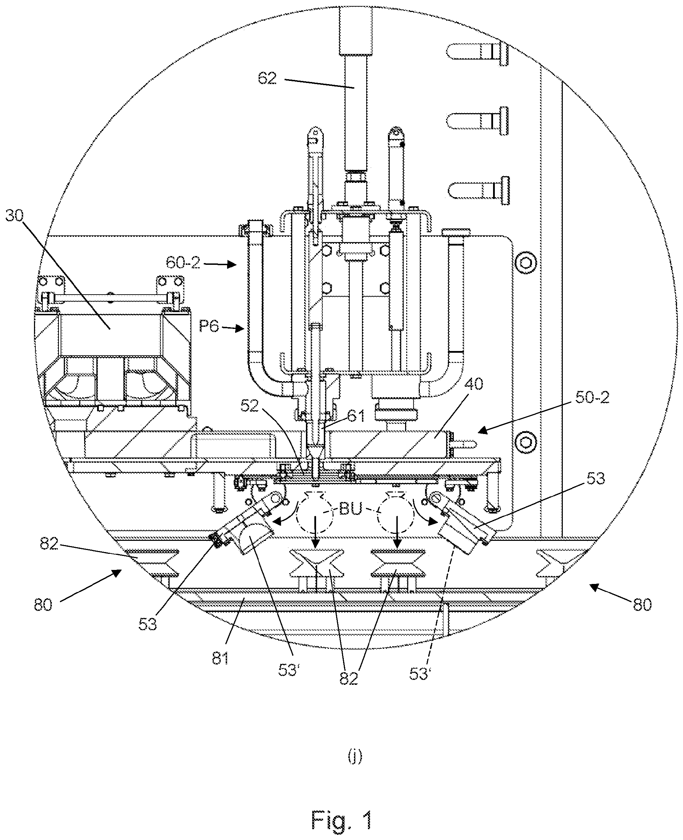

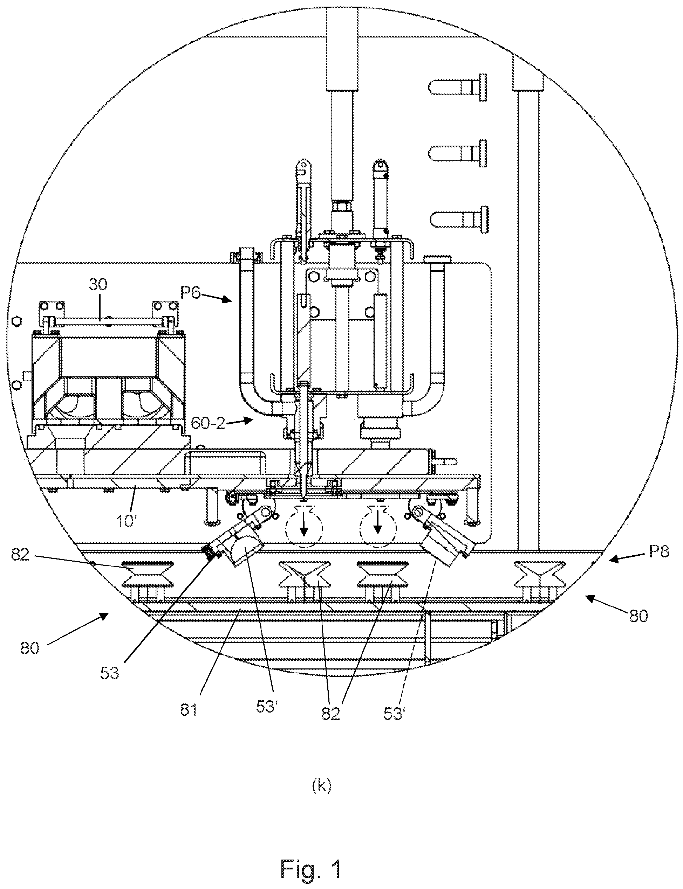

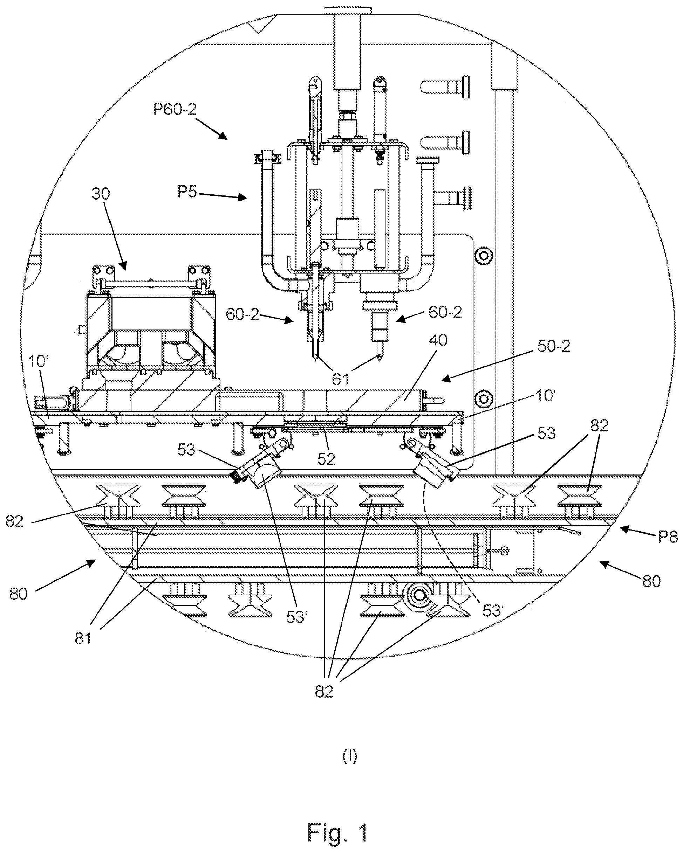

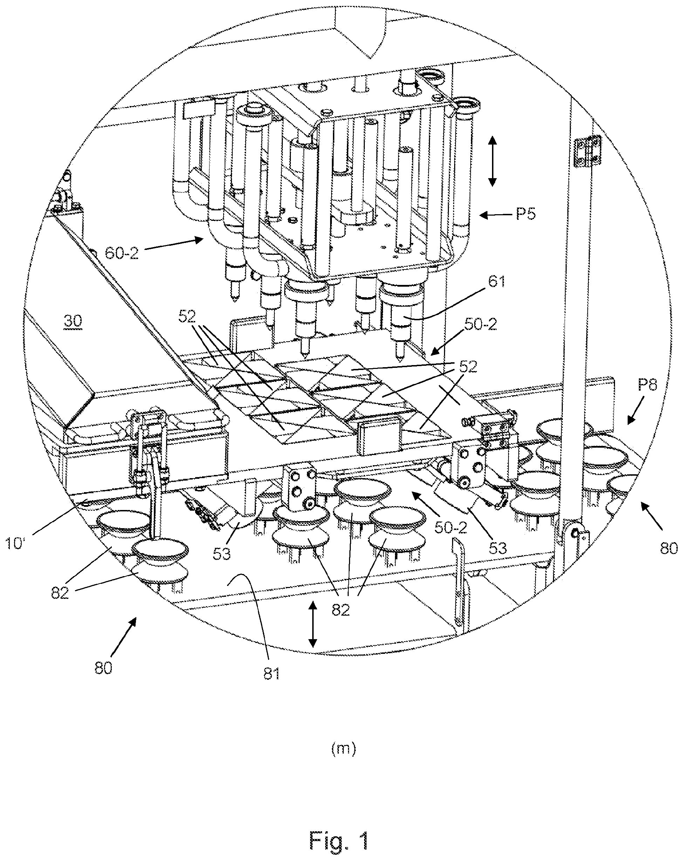

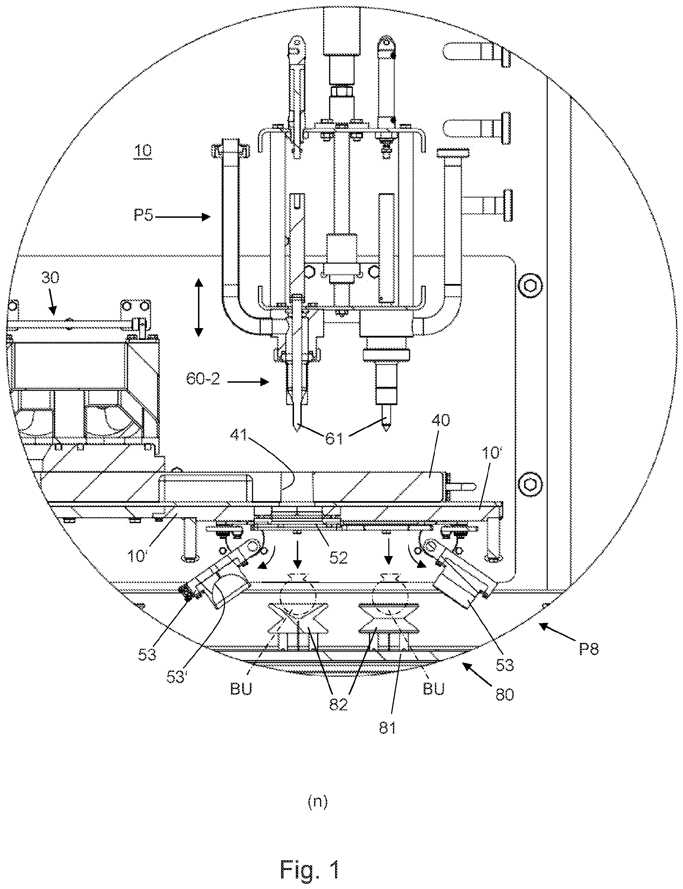

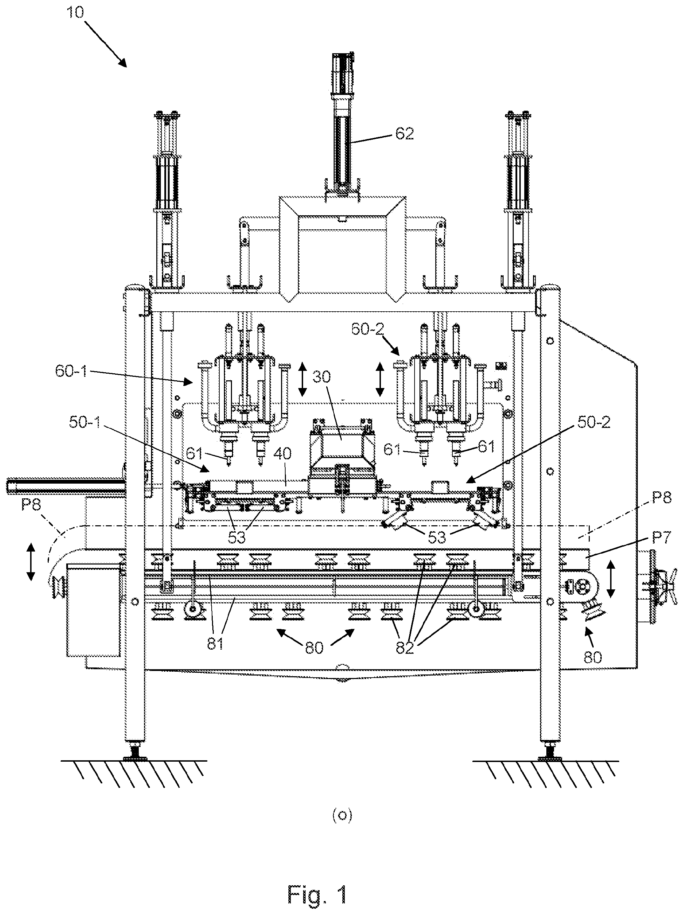

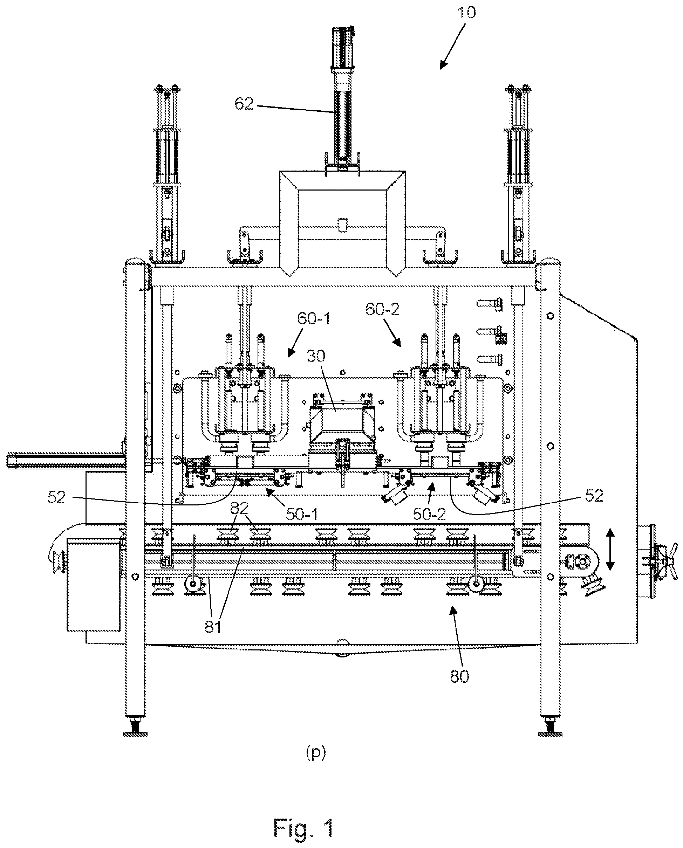

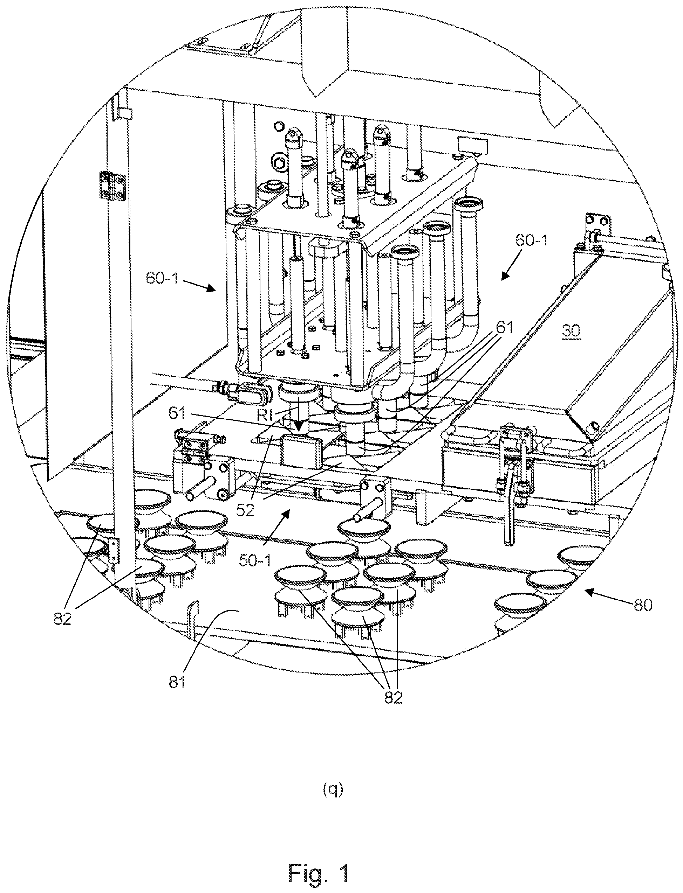

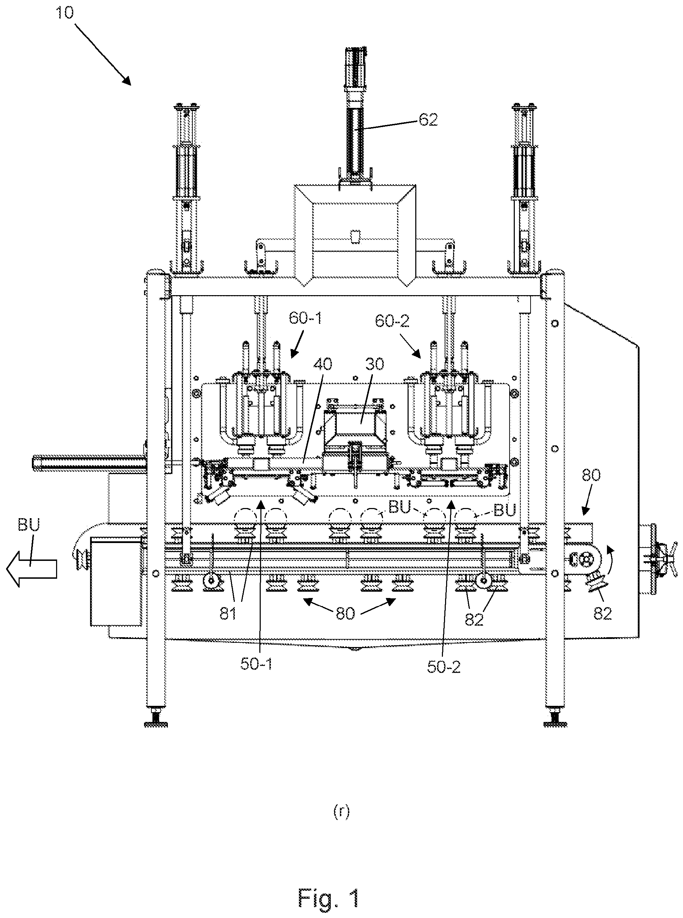

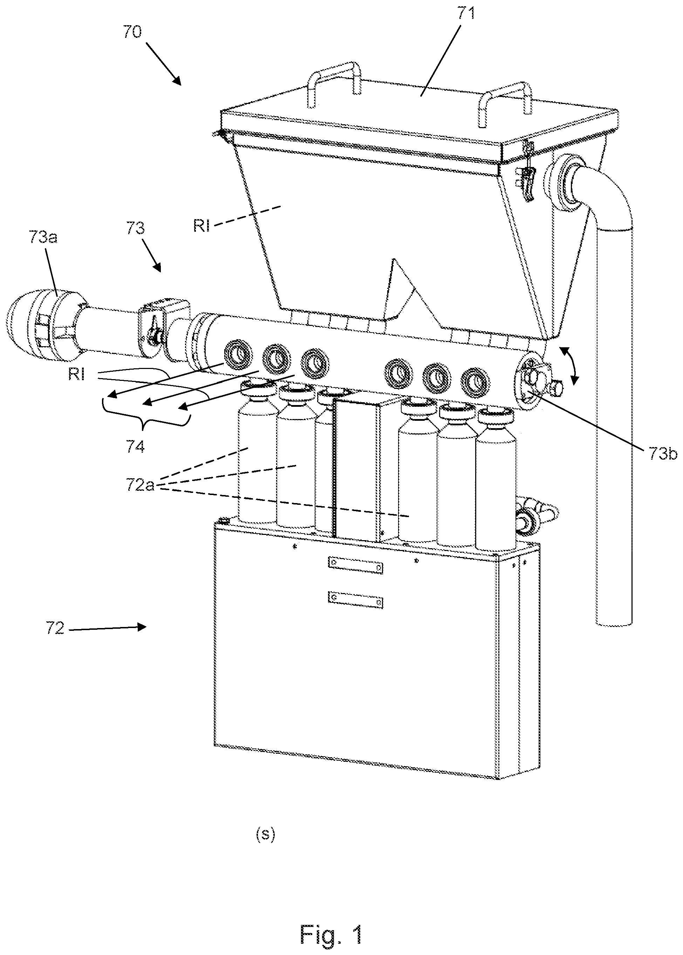

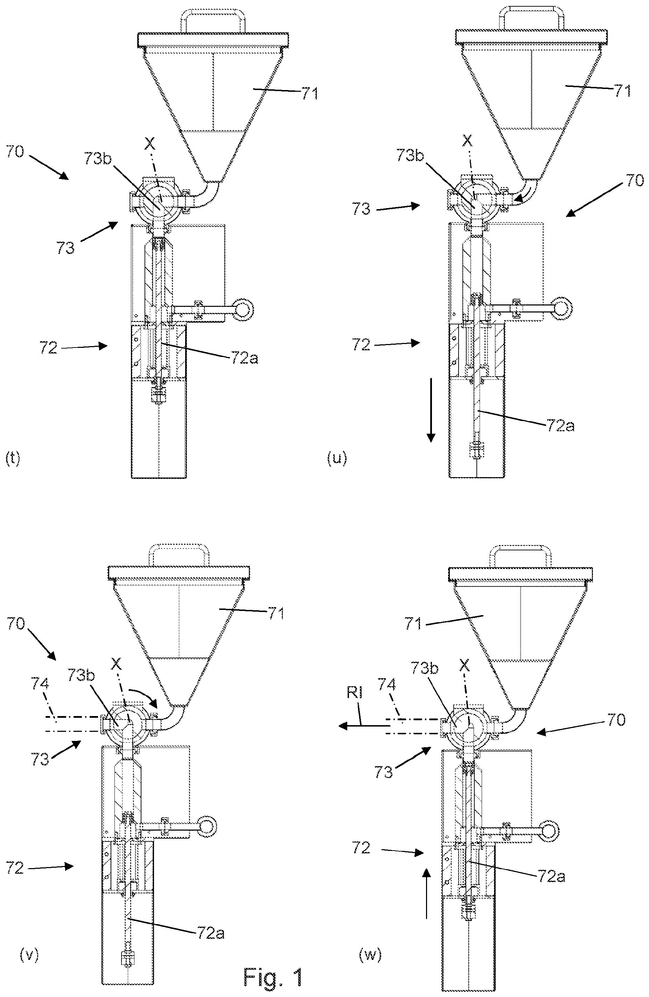

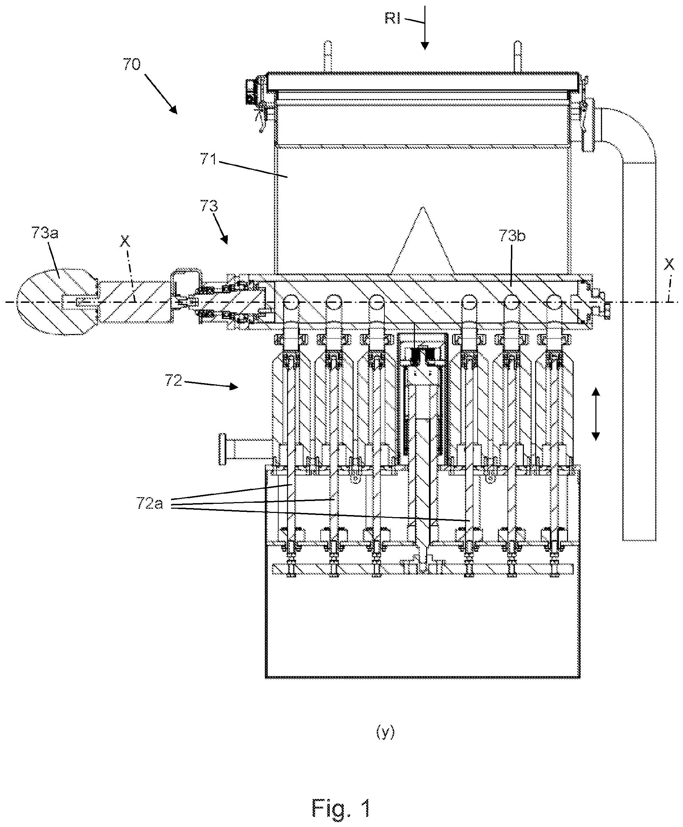

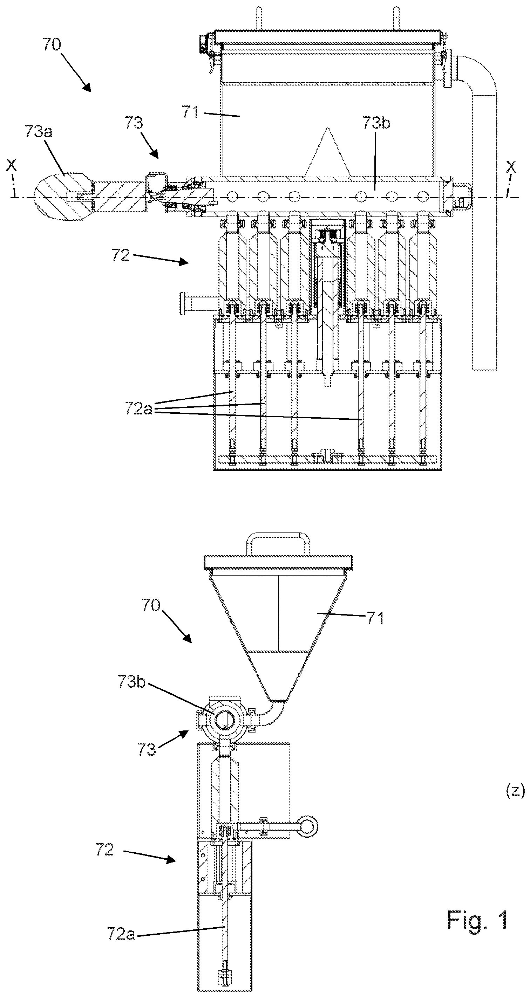

- Fig. 1 - sect. (a) is a graphic perspective view showing the whole machine for burrata cheese production according to the invention;
- Fig. 1 - sect. (b) is a graphic perspective view showing the machine for burrata cheese production according to the invention of Fig. 1 - sect. (a) with some of its parts removed;
- Fig. 1, divided into sections (c)-(r), is a set of graphic views that show, in time succession, the operating configurations and, in magnified form, their respective details, assumed by the machine for burrata cheese production according to the invention of Fig. 1 - sections (a)-(b) when in use and operation;
- Fig. 1, divided into sections (s)-(z), is another set of graphic views showing a pumping unit in use and operation for pumping and feeding a filling in the machine for burrata cheese production according to the invention;
- Fig. 2 is an operating block diagram that illustrates, as an integration of Fig. 1, the operation of the machine for burrata cheese production according to the invention;
- Fig. 3 is a photographic image of a typical and classical burrata cheese that can be produced by the machine of the invention;
- Fig. 4, divided into sections (a)-(b), is a set of graphic images schematically showing a further embodiment or variant of the machine for burrata cheese production according to the invention, and some operating configurations assumed by this variant in use and operation.

For completeness, it must be pointed out that, in the following description of the invention, any reference to a specific embodiment or application thereof shall not imply that a particular configuration, construction or feature, whether structural or operational, described in relation to that specific embodiment or application cannot be included also in other embodiments and applications of the same invention, where it will not be described for brevity's sake.

It follows that particular configurations, structures, steps or features, whether structural or operational, of the invention can be combined together in one of more embodiments or applications in any way deemed appropriate and coherent.

It must also be pointed out that the references below are used only for simplicity's sake, and shall not limit the protection scope or extension of the embodiments and applications of the invention described herein.

### Description of a preferred embodiment of the machine for producing mozzarella burrata cheese according to the invention

With reference to the drawings, and particularly to Fig. 1, a machine for producing mozzarella burrata cheese, also briefly called "burrata cheese", or similar stuffed cheeses, is generally designated as 10.

In detail, the machine 10 comprises:
- a hopper 20 adapted to receive and contain, as indicated by an arrow in Fig. 1 - sect. (a), dough P for forming mozzarella balls, designated as M, to be used for producing mozzarella burrata cheeses BU; and
- a feeding and extrusion system 30, in particular of the screw type, for receiving the dough P from the hopper 20 and feeding and extruding it in the form of "pasta filata" PF, as indicated by an arrow in Fig. 1 - sect. (c).

According to an important feature of the present invention, the configuration of the machine 10 further comprises, as shown in Fig. 1 - sections (c), (d), (e), (f):
- a slide 40 having a plurality of sockets 41, in the form of through holes, adapted to receive and be filled with the pasta filata PF fed by the feeding and extrusion system 30, so as to form mozzarella balls M in the sockets of the slide 40, wherein such plurality of sockets 41 of the slide 40 are divided into a first group of sockets, designated as 41-1, and a second group of sockets, designated as 41-2;
- a first forming station 50-1 adapted to cooperate with the sockets 41 of the first group of sockets 41-1 of the slide 40 to form and produce mozzarella burrata cheeses BU;
- a second forming station 50-2 adapted to cooperate with the sockets 41 of the second group of sockets 41-2 of the slide 40 to form and produce mozzarella burrata cheeses BU;
- a first dosing unit 60-1 adapted to cooperate with the slide 40 and with the first forming station 50-1 to form and produce the mozzarella burrata cheeses BU;
- a second dosing unit 60-2 adapted to cooperate with the slide 40 and with the second forming station 50-2 to form and produce the mozzarella burrata cheeses BU; and
- a pumping unit, generally designated as 70, performing the function of pumping and feeding a filling RI, in the form of stracciatella or cream, to the first and second dosing units, respectively designated as 60-1 and 60-2, in order to form and produce the mozzarella burrata cheeses BU.

For clarity, Fig. 1 - sect. (a) shows the machine 10 for burrata cheese production according to the invention in its entirety, whereas Fig. 1 - sect. (b) is a partial view of the same machine 10, without the pumping unit 70.

As will be described in detail hereinafter while illustrating the operation of the machine 10 of the invention, the slide 40 is adapted to move cyclically forwards and backwards along a horizontal plane so as to alternately assume and remain stationary in two opposite operating positions, in which the slide 40 cooperates with, respectively, the first forming station 50-1 or the second forming station 50-2 in order to produce the burrata cheeses BU.

As shown in Fig. 1 - sections (d) and (e), the first forming station 50-1 comprises a number of through holes 51, adapted to receive, and let through, the mozzarella balls M formed in the first group of sockets 41-1 of the slide 40, which is equal to the number of sockets 41 of the first group of sockets 41-1 of the slide 40.

Still with reference to Fig. 1 - sections (d) and (e), the second forming station 50-2 comprises a number of through holes 51, adapted to receive, and let through, the mozzarella balls M formed in the second group of sockets 41-2 of the slide 40, which is equal to the number of sockets 41 of the second group of sockets 41-2 of the slide 40.

The first dosing unit 60-1 comprises a number of syringe-shaped spouts or nozzles 61, designed to fill the mozzarella balls M with a dosed amount of filling RI to form the mozzarella burrata cheeses BU, which is equal to the number of sockets 41, in the form of through holes, of the first group of sockets 41-1 of the slide 40, and therefore also equal to the number of through holes 51 of the first forming station 50-1 letting through the mozzarella balls M.

The second dosing unit 60-2 comprises a number of syringe-shaped spouts or nozzles 61, designed to fill the mozzarella balls M with a dosed amount of filling RI to form the mozzarella burrata cheeses BU, which is equal to the number of sockets 41, in the form of through holes, of the first group of sockets 41-2 of the slide 40, and therefore also equal to the number of through holes 51 of the second forming station 50-2 letting through the mozzarella balls M.

For example, as shown in the drawings, the slide 40 has a total number of twelve sockets 41, wherein the first group 41-1 and the second group 41.2 of sockets 41 of the slide 40 consist each of 6 (six) sockets 41, and wherein the 6 (six) sockets 41 of the first group 41-1 and the 6 sockets 41 of the second group 41-2 are subdivided into 2 (two) rows, each one including 3 (three) aligned sockets 41, arranged transversally to the direction of the reciprocating translational motion of the slide 40.

Therefore, the first forming station 50-1 and the second forming station 50-2 have the same number of through holes 51, i.e. 6.

Likewise, the first dosing unit 60-1 and the second dosing unit 60-2 have the same number of nozzles 61, i.e. 6.

It is clear, however, that this number of 6 sockets of the first group of sockets 41-1 and of the second group of sockets 41-2 of the slide 40, which matches the number of through holes 51 of the first and second forming stations, respectively designated as 50-1, 50-2, and the number of nozzles 61 of the first and second dosing units, respectively designated as 60-1, 60-2, should not be deemed as limiting, since it may be different, in particular greater than 6, depending on the dimensions of the machine 10 of the invention and its production capacity, i.e. the quantity of burrata cheeses BU to be produced in a given period of time, e.g. per hour, for which the machine 10, being expandable and configurable into various models having different production capacities, has been designed.

As will be further described below while illustrating the operation of the machine 10 of the invention, the two dosing units 60-1 and 60-2 are adapted to lower themselves and rise j ointly in a cyclical manner, in order to cooperate with, respectively, the first forming station 50-1 and the second forming station 50-2 and produce the burrata cheeses 10.

For this purpose, both dosing units 60-1 and 60-2 are mounted on a common support structure that can be moved up or down, according to the phases of the cycle being executed by the machine 10 for producing the burrata cheeses BU, by common driving means, in particular consisting of a single electric cylinder, designated as 62 in the drawings.

The holes 51 of the first forming station 50-1, adapted to receive, and let through, the mozzarella balls M formed in the sockets 41 of the first group of sockets 41-1 of the slide 40, are each associated with:
- a diaphragm or iris valve, designated as 52, so called because it reminds of the shape of the iris of the human eye, comprising a plurality of radial gripping elements for gripping, closing and cutting a top portion of the burrata cheese BU; and
- a lid 53, arranged under the iris valve 52, pivotally rotatable relative to a fixed structure 10' of the machine 10;
wherein the lid 53 has a respective seat 53', cylindrical or hemispherical in shape, adapted to house the mozzarella ball M while forming the burrata cheese BU, and to release the burrata cheese BU, once formed in the first forming station 50-1, when the lid 53 rotates relative to the fixed structure 10', as will be further described below.

Likewise, the holes 51 of the second forming station 50-2, adapted to receive the mozzarella balls formed in the sockets 41 of the second group of sockets 41-2 of the slide 40, are each associated with:
- a diaphragm or iris valve 52; and
- a lid 53, arranged under the iris valve 52, pivotally rotatable relative to the fixed structure 10' of the machine 10;
wherein the lid 53 has a respective seat 53', hemispherical in shape, adapted to house the mozzarella ball M while forming the burrata cheese BU, and to release the burrata cheese BU, once formed in the second forming station 50-2, when the lid 53 rotates relative to the fixed structure 10'.

Such iris valves have been long known and used especially in the food packaging field, but they have also been employed in the dairy industry for products including stuffed cheeses similar to burrata cheese, and should therefore be deemed to be well known to those skilled in the art.

Therefore, for brevity's sake, these valves 52 will not be described in detail herein, particularly as concerns their control and actuation mechanisms.

We will only mention that a typical and known iris valve, like the one included in the machine 10 of the invention, which, as aforesaid, reminds of the iris of the human eye, is provided with a plurality of thin radial elements or sectors, arranged along a circumference, which can be moved jointly between an open configuration and a closed configuration, so as to either open or close a hole or an aperture with which the iris valve is associated.

In particular, as will be further described below, the machine 10 of the invention exploits the different possible configurations of these radial elements, performing the typical function of a conventional iris valve of opening or closing a passage, in order to, in a partially open configuration of the iris valve 52, retain the top part of the pouch of pasta filata PF as it is being filled with the filling RI and, in a closed configuration of the same iris valve 52, seal and cut off the mozzarella burrata cheese BU once it has been formed.

With reference to Fig. 1 - sections (s)-(z) of the drawings, the pumping unit 70 for pumping the filling RI, included in the machine 10 for producing burrata cheese BU, comprises:
- a hopper 71 adapted to receive and be filled with the filling RI, usually consisting of stracciatella or cream or a similar filling, to be used for filling the mozzarella balls M, so as to form the burrata cheeses BU;
- a pumping system, generally designated as 72, comprising a plurality of electrically operated plungers, each one designated as 72a, for pumping and feeding the filling RI, contained in and coming from the hopper 71, to the two dosing units 60-1 and 60-2; and
- a valve system, generally designated as 73, interposed between the hopper 71 and the pumping system 72, for selectively controlling the feeding of the filling RI, contained in the hopper 71, to the plungers 72a of said pumping system 72.

The number of plungers 72a of the pumping system 72 is equal to the number of syringe-shaped nozzles 61 of each dosing unit 60-1 and 60-2, and therefore also to number of sockets 41 of the first group 41-1 and of the second group 41-2 of sockets 41, formed in the slide 40. A pipe system, generally designated as 74, comprising a plurality of pipes 74a, each one corresponding to a plunger 72a of the pumping system 72 of the pumping unit 70, connects the latter to the first and second dosing units, respectively 60-1 and 60-2, thus putting them in communication for feeding the filling RI to said two dosing units 60-1 and 60-2 during the operation of the machine 10 for producing burrata cheese BU.

The valve system 73 in turn comprises:
- a rotary head 73a, pneumatically controlled, adapted to rotate about a respective axis X; and
- a diverter valve 73b, which can be actuated by the rotary head 73a, and which has a cylindrical body extending along the same axis X of the rotary head 73a;
wherein, when the machine 10 of the invention is in operation, as will be further described in detail hereinafter, the rotary head 73a of the valve system 73 is so controlled as to rotate about its axis X to assume a plurality of positions and dispose the diverter valve 73b into a plurality of corresponding configurations suitable for connecting, and selectively putting in communication, the hopper 71 and the pumping system 72, thereby feeding the filling RI, contained in the hopper 71, to the plungers 72a of the pumping system 72, which are in turn adapted to pump and feed the filling RI, through the pipe system 74, to the two dosing units 60-1 and 60-2.

In particular, Fig. 1 - sect. (t) shows a sectional view of the pumping unit 70 in a first operating configuration, in which the diverter valve 73b of the valve system 73 is set in a respective first position, so as to connect the hopper 71 to the plungers 72a of the pumping system 72, which are in turn arranged in a first raised position, ready to suck in the filling RI contained in the hopper 71.

Fig. 1 - sect. (u) shows the pumping unit 70 in a second operating configuration, in which the diverter valve 73b is still set in its first position, and the plungers 72a of the pumping system 72 are electrically operated to reach a second lowered position, thus sucking in the filling RI from the hopper 71 containing it, as indicated by arrows in said Fig. 1 - sect. (u). Fig. 1 - sect. (v) shows the pumping unit 70 in a third operating configuration, in which the diverter valve 73b has been turned by 90° from the first position, as indicated by an arrow, so as to reach a respective second position and connect the plungers 72a, which have just sucked in the filling RI from the hopper 71, to the pipe system 74 that connects the pumping unit 70 to the two dosing units 60-1 and 60-2.

Lastly, Fig. 1 - sect. (w) shows the pumping unit 70 in a fourth operating configuration, in which the diverter valve 73b is still set in its second position, turned from the first position, and the plungers 72a of the pumping system 72 are electrically operated to reach the first raised position again, thus pumping the filling RI, through the pipe system 74, towards two dosing units 60-1 and 60-2, as indicated by arrows in said Fig. 1 - sect. (w).

For clarity, and as an integration of Fig. 1 -sect. (s), Fig. 1 - sect. (y) shows a sectional view of the pumping unit 70 to highlight the internal parts of said pumping unit 70.

Fig. 1 - sect. (z) shows, as an integration of Fig. 1 - sect. (s), the pumping unit 70 in an additional washing configuration, in which the pumping unit 70 is prearranged for being suitably washed, e.g. during a maintenance phase of the machine 10 of the invention or after a programmed operating time of said machine 10; to this end, the diverter valve 73b has been removed from the valve system 73, and the plungers 72a of the pumping system 72 have been arranged in their lowered position.

Furthermore, the machine 10 comprises discharging means, generally designated as 80, adapted to receive from the first forming station 50-1 and from the second forming station 50-2 the formed and produced mozzarella burrata cheeses BU, and to discharge them from said machine 10 used for their production.

As will be described in detail below while illustrating the operation of the machine 10, these discharging means 80 comprise a conveyor belt, designated as 81, adapted to transport and discharge the burrata cheeses BU, formed in the two forming stations 50-1 and 50-2, outside the machine 10.

In particular, this conveyor belt 81 is adapted to receive from above the mozzarella burrata cheeses BU, formed in the seats 53' of the lids associated with the holes 51 of the two forming stations 50-1 and 50-2, when such lids 53 are rotated from a closed position, in which they close the holes 51 and prevent the burrata cheeses BU housed in the seats 53' of the lids 53 from falling down, to an open position, in which the lids 53 release the burrata cheeses BU, letting them fall onto the conveyor belt 81 from the respective seats 53', as clearly indicated by arrows in the drawings.

As will be further described below, this conveyor belt 81 is adapted to move vertically between:
- a raised position, adjacent to the holes 51 of the first and second forming stations 50-1, 50-2, so that the conveyor belt 81 can receive them from above, when the lids 53, which obstruct the bottom of such holes 51, are rotated into their open position, thus letting the burrata cheeses BU fall onto the conveyor belt 81; and
- a lowered position, with respect to the raised position, so as to move away from the holes 51 the mozzarella burrata cheeses BU received from the first and second forming stations 50-1, 50-2, which can then be freely discharged from the machine 10.

For this purpose, the conveyor belt 81 includes a plurality of seats 82, in the form of cups, adapted to receive, from the first and second forming stations 50-1 and 50-2, the formed mozzarella burrata cheeses BU and lodge them stably so that they cannot fall off the conveyor belt 81 as it moves forwards to discharge them from the machine 10.

Moreover, the conveyor belt 81 is adapted to, when set in its lowered position, advance intermittently, in synchronism with the phases of forming the mozzarella burrata cheeses BU, so as to alternately receive the burrata cheeses BU from the first forming station 50-1 or from the second forming station 50-2 and discharge the burrata cheeses BU from the machine 10.

The other parts and devices of the machine 10 according to the present invention, which are necessary for its operation, such as the means for controlling the forward/backward reciprocating motion of the slide 40, the means for raising/lowering and controlling the forward movement of the conveyor belt 81 of the discharging means 80 used for discharging the burrata cheeses BU, the central control unit and its program governing the various operating steps of said machine 10, as well as other means and devices, will not be described in detail herein, since they are well known to those skilled in the art and belong to the common general knowledge.

Furthermore, the description of such known means and devices included in the machine 10 does not seem to be essential to fully understand the characteristics of the present invention. No further description will be given as well as regards the means consisting of the plungers 72a or an equivalent volumetric pumping system, included in the pumping unit 70 and performing the function of pumping the filling RI into the two dosing units 60-1 e 60-2, since their configuration and operation should be considered to be known to those skilled in the art and require no further explanation.

### Operation of the machine for burrata cheese production according to the invention

With reference to Fig. 1 - sections (a)-(b), which show the whole machine 10 of the invention in perspective form, during an initial step the dough P, to be used for forming the mozzarella balls M, is loaded into the hopper 20 of said machine 10, as indicated by an arrow, so as to prepare and prearrange the latter for continuous production of burrata cheeses BU.

Subsequently, as shown in Fig. 1 - sect. (c), which shows a cross-section of the machine 10, the screw-type feeding system 30 receives the dough P from the hopper 20 and extrudes it to feed it continuously to the machine 10 in the form of "pasta filata" PF, as indicated by a corresponding arrow.

During the normal continuous operation of the machine 10, as shown in Fig. 1, sections (d)-(e) and as indicated by a double arrow, the slide 40 continuously moves horizontally forwards and backwards, so as to alternately assume:
- a first operating position, designated as P1, in which the first group of sockets 41-1 of the slide 40 is arranged in the area of the first forming station 50-1 and of the first dosing unit 60-1 to allow the mozzarella balls M formed in the first group of sockets 41-1 of the slide 40 to receive and be filled with the filling RI, by means of the nozzles 61 of the first dosing unit 60-1, and the second group of sockets 41-2 of the slide 40 is arranged in the area of the feeding system 30 to simultaneously receive and be filled with pasta filata PF, fed by the same feeding system 30, so as to form mozzarella balls M in the sockets 41 of the second group of sockets 41-2; and
- a second operating position, designated as P2, in which the second group of sockets 41-2 of the slide 40 is arranged in the area of the second forming station 50-2 and of the second dosing unit 60-2 to allow the mozzarella balls M formed in the second group of sockets 41-2 of the slide 40 to receive and be filled with the filling RI, by means of the nozzles 61 of the second dosing unit 60-2, and the first group of sockets 41-1 of the slide 40 is arranged in the area of the feeding system 30 to simultaneously receive and be filled with pasta filata PF, fed by the same feeding system 30, so as to form mozzarella balls M in the sockets 41 of the first group of sockets 41-1.

For clarity, Fig. 1 - sect. (d) shows the slide 40 in the operating position P1, suitable to allow the mozzarella balls M formed in the first group of sockets 41-1 of the slide 40 to receive the filling RI from the first dosing unit 60-1, while the sockets 41 of the second group of sockets 41-2 of the slide 40 receive pasta filata PF from the feeding system 30, so that mozzarella balls M are formed in such sockets.

In turn, Fig. 1 - sect. (e) shows the slide 40 in the operating position P2, suitable to allow the mozzarella balls M formed in the second group of sockets 41-2 of the slide 40 to receive the filling RI from the second dosing unit 60-2, while the sockets of the first group of sockets 41-1 of the slide 40 receive pasta filata PF from the feeding system 30, so that mozzarella balls M are formed in such sockets.

As shown in the drawings, when the slide 40 moves into the first operating position P1, the first dosing unit 60-1 is set into a lowered position relative to the first forming station 50-1 and is then activated, i.e. its nozzles 61 are opened, in order to be able to dispense the filling RI, while at the same time the second dosing unit 60-2 also moves into a lowered position relative to the second forming station 50-2, without however being activated, i.e. its nozzles 61 remain in a closed configuration to prevent the filling RI from being dispensed.

Likewise, when the slide 40 moves into the second operating position P2, the second dosing unit 60-2 is set into a lowered position relative to the second forming station 50-2 and is then activated, i.e. its nozzles 61 are opened, in order to be able to dispense the filling RI, while at the same time the first dosing unit 60-1 also moves into a lowered position relative to the first forming station 50-1, without however being activated, i.e. its nozzles 61 remain in a closed configuration to prevent the filling RI from being dispensed.

For clarity, although substantially similar, the operation of the first forming station 50-1, in cooperation with the first dosing unit 60-1 and the slide 40 set in the first operating position P1, and the operation of the second forming station 50-2, in cooperation with the second dosing unit 60-2 and with the slide 40 set in the second operating position P2, will be described separately.

### Operation of the first forming station of the machine for burrata cheese production

Once the slide 40 has been set into the respective operating position P1, the first dosing unit 60-1 is activated and lowered, as indicated by an arrow in the drawings, from a respective raised position, designated as P3, in which the first dosing unit 60-1 is away from the first forming station 50-1, to a lowered position, designated as P4, which is close to the first forming unit 50-1, so that syringe-shaped nozzles 61 of said first dosing unit 60-1 can push the mozzarella balls M, formed in the sockets 41 of the first group of sockets 41-1 of the slide 40, into corresponding seats 51, in the form of holes and in equal number, of the first forming station 50-1.

Thus, through the effect of the thrust exerted by the nozzles 61 of the first dosing unit 60-1, the mozzarella balls M are made to pass through the holes 51 of the first forming station 50-1 and then rest in the seats 53' defined by the lids 53 associated with such holes 51.

In this phase, during which the first dosing unit 60-1 is moved down from its raised position P3 to its lowered position P4 and then activated, i.e. its nozzles 61 are set into an open configuration to allow the filling RI to be dispensed, the second dosing unit 60-2 is also lowered jointly with the first dosing unit 60-1 and set into a respective lowered position P6, but remains inactive, i.e. its nozzles 61 remain in a closed configuration to prevent the filling RI from being dispensed.

During this phase, in addition, the iris valves 52a, associated with the holes 51 of the first forming station 50-1 that receive the mozzarella balls M through the effect of the thrust exerted thereon by the nozzles 61 of the first dosing unit 60-1, are set into a completely open configuration, suitable to allow the first dosing unit 60-1, when it is lowered from the raised position P3 to the lowered position P4, to push, by means of its syringe-shaped nozzles 61, the mozzarella balls M formed in the sockets 41 of the first group of sockets 41-1 of the slide 40 through the through holes 51 of the first forming station 50-1 and into the cylindrical or hemispherical seats 53' defined by the lids 53 included in said first forming station 50-1.

After the mozzarella balls M have been pushed through the holes 51 of the first forming station 50-1 and into the seats 53', the iris valves 52 associated with such holes 51 are then controlled to assume:
- a partially open configuration, so as to retain the mozzarella balls M arranged in such holes 51 of the first forming station 50-1, while at the same time the first dosing unit 60-1, by means of its nozzles 61, fills the mozzarella balls M with the filling RI, appropriately dosing the quantity thereof, thus inflating them and forming the mozzarella burrata cheeses BU; and subsequently:
- a completely closed configuration, so as to seal and cut off the formed mozzarella burrata cheeses BU, which are consequently detached from an excess residual upper part, also referred to as knot or head, to be subsequently removed; or
- a partially closed configuration, so as to close the pouch S of each mozzarella ball M, thus sealing the burrata cheeses BU, but leaving a flake-shaped head or upper portion F, like the one shown in Fig. 3, attached to the produced burrata cheese BU.

After the burrata cheeses BU have been formed in the seats 53' of the lids 53 associated with the through holes 51 of the first forming station 50-1, by filling the mozzarella balls M with the filling RI dispensed by the first dosing unit 60-1, the lids 53 associated with each one of such holes 51 are rotated, as indicated by arrows in the drawings, from:
- a closed configuration, in which the lids 53 house and retain the mozzarella balls M in their seats 53', thereby preventing them from falling while forming the mozzarella burrata cheeses BU; to
- an open configuration, so as to release downwards by gravity from the seats 53' of the lids 53 of the first forming station 50-1 the formed mozzarella burrata cheeses BU released by the iris valves 52.

In its turn, the first dosing unit 60-1, after having filled the mozzarella balls M with a dosed amount of filling RI to form the burrata cheeses BU in the first forming station 50-1, is commanded to move up from the lowered position P4, thus moving its nozzles 61 away from the area of the first forming station 50-1, and return into the raised position P3.

Simultaneously, i.e. as the first dosing unit 60-1 moves up after having dispensed the filling RI, the iris valves 52 associated with the through holes 51 of the first forming station 50-1 are commanded to assume their closed configuration.

Thus, as already described above, the iris valves 52 seal and cut the mozzarella burrata cheeses BU, which are consequently detached and separated, so that they can be released and fall by gravity from the seats 53', defined by the lids 53 associated with the holes 51 of the first forming station 50-1, when such lids 53 are rotated from the closed configuration to the open configuration.

### Operation of the second forming station of the machine for burrata cheese production

The process described above with reference to the first forming station 50-1 and the first dosing unit 60-1 when the slide 40 is in its operating position P1 also applies to the second forming station 50-2 and the second dosing unit 60-2 when the slide 40 is in its second operating position P2.

During the operation of the machine 10, therefore, when the slide 40 is set into the respective operating position P2, the second dosing unit 60-2 is activated and lowered, as indicated by an arrow in the drawings, from its raised position P5, in which, as aforesaid, the second dosing unit 60-2 is away from the second forming station 50-2, to a lowered position, designated as P6, which is close to the second forming unit 50-2, so that the nozzles 61 of said second dosing unit 60-2 can push the mozzarella balls M, formed in the sockets 41 of the second group of sockets 41-2 of the slide 40, into corresponding seats 51, in the form of holes and in equal number, of the second forming station 50-2.

Thus, through the effect of the thrust exerted by the nozzles 61 of the second dosing unit 60-2, the mozzarella balls M are made to pass through the holes 51 of the second forming station 50-2 and rest in the seats 53' defined by the lids 53 associated with such holes 51.

In this phase, during which the second dosing unit 60-2 is moved down from its raised position P5 to its lowered position P6 and then activated, i.e. its nozzles 61 are set into an open configuration to allow the filling RI to be dispensed, the first dosing unit 60-1 is also lowered jointly with the second dosing unit 60-2 and set into its lowered position P4, but remains inactive, i.e. its nozzles 61 remain in a closed configuration to prevent the filling RI from being dispensed.

During this phase, in addition, the iris valves 52, associated with the holes 51 of the second forming station 50-2 that receive the mozzarella balls M through the effect of the thrust exerted thereon by the nozzles 61 of the second dosing unit 60-2, are set into a completely open configuration, suitable to allow the second dosing unit 60-2, when it is lowered from the raised position P5 to the lowered position P6, to push, by means of its syringe-shaped nozzles 61, the mozzarella balls M formed in the sockets 41 of the second group of sockets 41-2 of the slide 40 through the through holes 51 of the second forming station 50-2 and into the cylindrical or hemispherical seats 53' defined by the lids 53 included in said second forming station 50-2.

After the mozzarella balls M have been pushed through the through holes 51 of the second forming station 50-2 and into the seats 53' defined by the lids 53 included in said second forming station 50-2, the iris valves 52 associated with such holes 51 are then controlled to assume:
- a partially open configuration, so as to retain the mozzarella balls M arranged in such holes 51 of the second forming station 50-2, while at the same time the second dosing unit 60-2, by means of its nozzles 61, fills the mozzarella balls M with the filling RI, appropriately dosing the quantity thereof, thus inflating them and forming the mozzarella burrata cheeses BU; and subsequently:
- a completely closed configuration, so as to seal and cut off the formed mozzarella burrata cheeses BU, which are consequently detached from an excess residual upper part, or knot, to be subsequently removed from the machine 10; or
- a partially closed configuration, so as to seal the mozzarella burrata cheeses BU without however cutting them, but leaving a flake-shaped upper portion or head attached to the produced burrata cheese BU.

After the burrata cheeses BU have been formed in the seats 53' of the lids 53 associated with the through holes 51 of the second forming station 50-2, by filling the mozzarella balls M with the filling RI dispensed by the second dosing unit 60-2, the lids 53 associated with each one of such holes 51 are rotated from:
- a closed configuration, in which the lids 53 house and retain the mozzarella balls M in their seats 53', thereby preventing them from falling while forming the mozzarella burrata cheeses BU; to
- an open configuration, so as to release downwards by gravity from the seats 53' of the lids 53 of the second forming station 50-2 the formed mozzarella burrata cheeses BU released by the iris valves 52.

In its turn, the second dosing unit 60-2, after having filled the mozzarella balls M with a dosed amount of filling RI to form the burrata cheeses BU in the second forming station 50-2, is commanded to move up from the lowered position P6, thus moving its nozzles 61 away from the area of the second forming station 50-2, and return into its raised position P5. Simultaneously, i.e. as the second dosing unit 60-2 moves up away from the second forming station 50-2, the iris valves 52 associated with the holes 51 of said second forming station 50-2 assume the closed configuration.

Thus, as already described above, the iris valves 52 seal and cut the mozzarella burrata cheeses BU, which are consequently detached and separated, so that they can be released and fall by gravity from the seats 53', defined by the lids 53 associated with the holes 51 of the second forming station 50-2, when such lids 53 are rotated from the closed configuration to the open configuration.

### Operation of the discharging means included in the machine for burrata cheese production

The discharging means 80 serve both the first forming station 50-1 and the second forming station 50-2 for the purpose of cyclically discharging the formed burrata cheeses BU from said two forming stations 50-1, 50-2 and from the machine 10; therefore, the operation of these discharging means 80 is substantially similar for both of these forming stations 50-1 and 50-2.

In particular, when it has to discharge the burrata cheeses BU formed in the first forming station 50-1, the conveyor belt 81 of these discharging means 80 is commanded to move vertically, as shown by a double arrow in the drawings, specifically in Fig. 1 - sect. (o), from:
- a lowered position, designated as P7, in which the conveyor belt 81 is spaced apart from the holes 51 of the first forming station 50-1, to
- a raised position, designated as P8 and represented as a dashed-dotted line in Fig. 1 - sect. (o), with respect to the lowered position P7, in which position P8 the conveyor belt 81 is arranged adjacent to and just below the holes 51 of the first forming station 50-1,
while at the same time the lids 53, associated with such holes 51, are rotated from their closed position to their open position, thus letting the burrata cheeses BU, housed in said holes 51, fall by gravity onto the cup-shaped seats 82 of the conveyor belt 81.

Then the conveyor belt 81, once it has received the burrata cheeses BU from above in the respective seats 82, is moved down and returned into the lowered position P7. Subsequently, once it has been set into its lowered position P7 with the burrata cheeses BU received from the first forming station 50-1 and housed in the seats 82, the conveyor belt is commanded to move forwards intermittently, by an advance step, in synchronism with the phases of forming the mozzarella burrata cheeses BU, to get ready to receive the burrata cheeses BU which in the meantime have been formed by the second forming station 50-2. At the end of this advance step, the conveyor belt 81 executes a new discharge cycle, similar to the one described above, in order to discharge the burrata cheeses B from the second forming station 50-2.

Therefore, the conveyor belt 81 moves vertically again from the lowered position P7 to the raised position P8, so as to arrange itself adj acent to and just below the holes 51 of the second forming station 50-2; in this raised position P8, it receives from above the burrata cheeses BU from the seats 53' defined by the lids 53 associated with said holes 51 as such lids 53 are rotated into the open configuration.

Then the conveyor belt 81, after having received into its seats 82 the burrata cheeses BU formed in the second forming station 50-2, moves down again from the raised position P8 to the lowered position P7 and moves forwards by a step, so as to get ready to receive the burrata cheeses BU which in the meantime have been formed by the first forming station 50-1.

In this way, by advancing intermittently and cyclically one step at a time as indicated by an arrow in the drawings, the conveyor belt 81 arranges itself with its seats 82 centred in the area under the forming stations 50-1 and 50-2, so as to alternately receive from above the burrata cheeses BU formed in the first and second forming stations 50-1, 50-2, and then discharge the burrata cheeses BU outside the machine 10, as indicated by an arrow in Fig. 1 - sect. (r).

As concerns the excess upper parts or knots, produced by the cutting operation executed by the iris valves 52, of the mozzarella balls M arranged in the seats 53' defined by the lids 53 of the two forming stations 50-1 and 50-2, when the iris valves 52 open after cutting off the mozzarella balls M, these excess parts fall onto the conveyor belt 81 while the cup-shaped seats 82 of the same conveyor belt 81 receive the burrata cheeses BU.

Therefore, the conveyor belt 81 provides for discharging from the machine 10 these excess parts or knots along with the burrata cheeses BU.

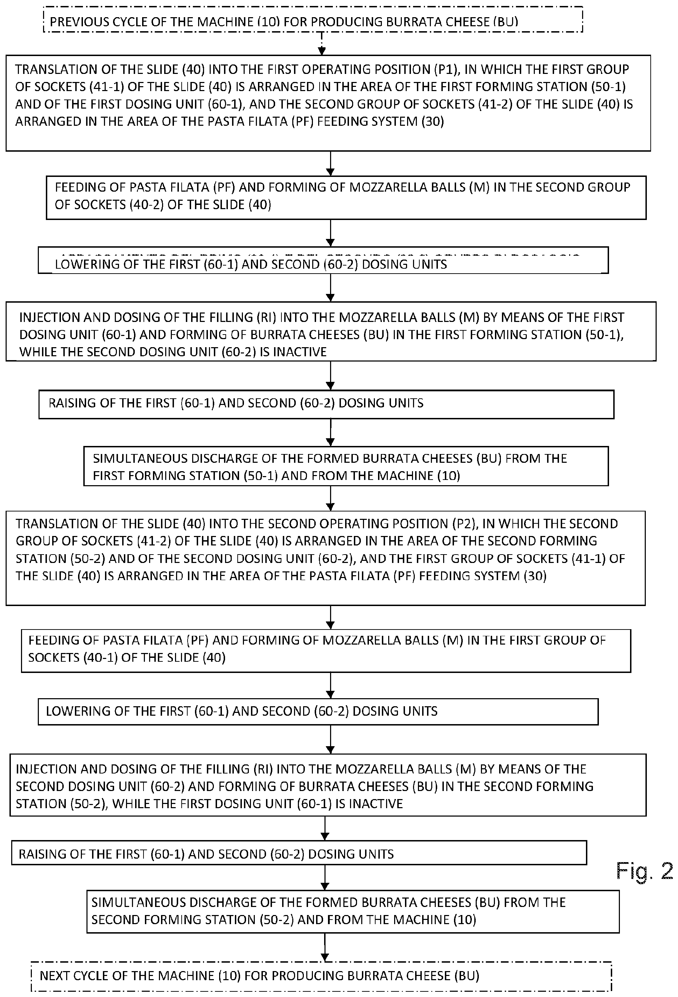

For more clarity, and as an integration of the preceding description of the operation of the machine 10 of the invention, the operating block diagram of Fig. 2 illustrates the various steps of the operation of the machine 10 of the invention for producing burrata cheese BU.

In particular, in addition to highlighting the cyclic course of the process, this diagram clearly shows that:
- with the slide 40 arranged in the first operating position P1, the mozzarella balls M formed in the first group of sockets 41-1 of the slide 40 receive and are filled with the filling RI in the first forming station by the first dosing unit 60-1, thus forming the burrata cheeses BU, while at the same time the second dosing unit 60-2 is inactive, i.e. its nozzles 61 are in a closed configuration, and the second group of sockets 41-2 of the slide 40 receives pasta filata PF from the feeding system 30, so that mozzarella balls M are formed in the second group of sockets 41-2 of the slide 40; and that,
- with the slide 40 arranged in the second operating position P2, the mozzarella balls M formed in the second group of sockets 41-2 of the slide 40 receive and are filled with the filling RI in the second forming station 50-2 by the second dosing unit 60-2, thus forming the burrata cheeses BU, while at the same time the first dosing unit 60-1 is inactive, i.e. its nozzles 61 are in a closed configuration, and the first group of sockets 41-1 of the slide 40 receives pasta filata PF from the feeding system 30, so that mozzarella balls M are formed in the first group of sockets 41-1 of the slide 40.

Furthermore, the same diagram of Fig. 2 shows that many operations, to be executed as parts of the cyclic process that characterizes the machine 10 of the invention for producing burrata cheese BU, are carried out simultaneously with other operations, thus optimizing and significantly reducing the total time of execution of each cycle, which is beneficial for the overall productivity of the machine 10.

It is therefore clear, in light of the above description, that the invention fully achieves the intended objects, in particular by proposing a novel and innovative machine for producing mozzarella burrata cheese which exhibits unique levels of performance and offers significant advantages over the machines currently in use and available on the market, while at the same time ensuring a high level of quality of the produced mozzarella burrata cheese, such as, in particular, fully automatic operation, high productivity, and the possibility of adapting and configuring the machine into differently sized models according to different production capacity requirements, i.e. the volumes and quantities of burrata cheese units to be produced by the machine within a given time.

### Description of a further embodiment of the machine for producing mozzarella burrata cheese according to the invention

It is also apparent that the inventive concept at the basis of the present invention is not limited to the specific embodiment 10 of the machine for producing burrata cheese BU described above, but can be extended to comprise further embodiments and variants sharing and applying the same basic inventive concept.

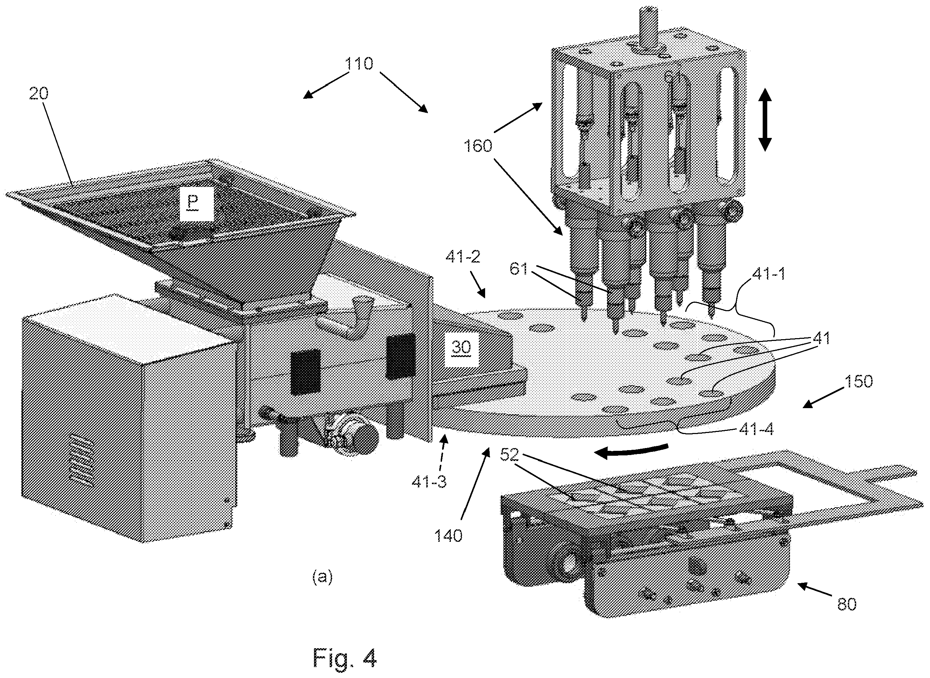

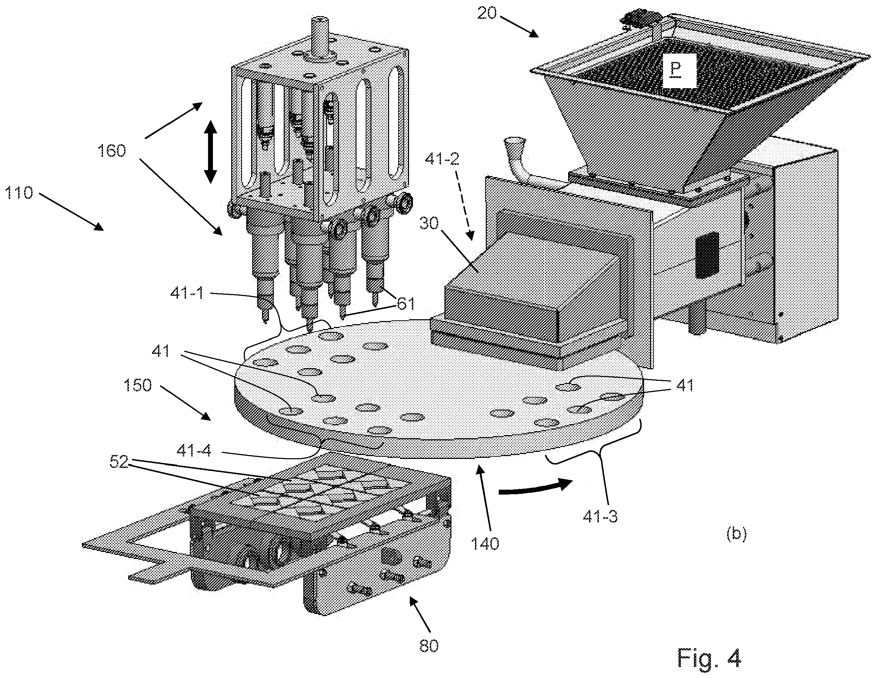

Fig. 4, divided into sections (a)-(b), illustrates a variant, generally designated as 110, of the machine for burrata cheese production according to the invention, which variant 110 is also directed to, just like the previously described embodiment 10, automating the entire production cycle of the burrata cheese BU, and comprises, just like the embodiment 10, at least one forming station and at least one dosing unit adapted to mutually cooperate to produce the burrata cheese BU, wherein the forming station has a number of seats, in the form of through holes, each one associated at their bottom with a rotatable lid and adapted to receive a mozzarella ball M, which is equal to the number of nozzles included in the dosing unit and used to fill the mozzarella balls M with the filling.

For brevity, this variant 110 of the machine for burrata cheese production will not be described in detail herein, since reference can be made to the previous description of the machine 10 and to Fig. 4, divided into sections (a) and (b), which schematically shows the fundamental parts of this further embodiment 110 of the machine for producing burrata cheese BU and some operating configurations assumed by said machine 10 when in use and operation.

Therefore, for this further embodiment 110 of the machine for burrata cheese production only those important and essential features which distinguish it from the previously described embodiment 10 will be described, with reference to Fig. 4.

Moreover, for clarity reasons, those parts and elements included in this variant 110 of the machine for burrata cheese production which are equal and correspond to parts and elements of the embodiment 10 will be referred to by using, whenever possible, the same reference numerals, while any parts and elements substantially different from those of the machine 10 will be indicated by reference numerals incremented by 100.

In detail, the machine 110 for producing burrata cheese BU differs from the previously described machine 10 essentially in that the machine 110 comprises, instead of the slide 40 included in the machine 10, a carousel or rotary circular platform 140, and, instead of the two forming stations 50-1 and 50-2 and the two corresponding dosing units 60-1 and 60-2 included in the machine 10, only one forming station 150 and only one dosing unit 160, respectively.

In turn, the rotary platform 140 has a plurality of sockets 41, in the form of through holes, for forming the mozzarella balls M, which sockets are identical to those of the slide 40 of the machine 10, wherein such sockets 41 defined by the rotary platform 140 are divided into four groups of sockets, respectively 41-1, 41-2, 41-3, 41-4, each one including 6 sockets.

Furthermore, the platform 140 is adapted to rotate intermittently about its own axis, as indicated by an arrow in Fig. 4, to position each one of the four groups of sockets 41-1, 41-2, 41-3, 41-4, in succession, in the area of the forming station 150 and of the dosing unit 160, so that the mozzarella balls M, already formed in the sockets, can receive the filling RI from the dosing unit 160 and form the burrata cheeses BU in the forming station 150, while at the same time the sockets 41 of that group of sockets which, on the platform 140, follows the one housing the mozzarella balls M being filled with the filling RI by the dosing unit 160 receive pasta filata PF from the feeding system 30 to form mozzarella balls M.

The forming station 150 has, in turn, a plurality of holes equal in number to the sockets 41 of each one of the groups of sockets 41-1, 41-2, 41-3, 41-4 on the rotary platform 140, and each one of such holes is in turn associated with an iris valve 52 and a lid, pivotally rotatable relative to a fixed structure of the machine 110 and defining a semi-circular seat adapted to receive the mozzarella balls M and to release the burrata cheeses BU once they have been formed in the forming station 150, wherein both the iris valves 52 and the lids, associated with the holes of the forming station 150, are identical to those included in the machine 10. Lastly, the produced burrata cheeses BU are released by the forming station 150 and definitively discharged from the machine 110 by discharging means 80, in particular comprising a conveyor belt, which discharging means are also substantially equal, both structurally and operatively, to those described for the machine 10.

### Further variants

For example, the specific mode of operation of the iris valve 52 that retains the mozzarella ball M in each one of the seat 51 of the two forming stations 50-1 and 50-2 during the formation of the burrata cheese BU may be different from the one described above with reference to the machine 10, while however performing the same function.

In particular, the iris valve 52 may be so configured as to cooperate with the upper portion of the mozzarella ball M in order to close it, after it has received the filling RI, without cutting it off and without detaching it from an excess upper part, or knot, to be then discharged as provided in the machine 10.

In such a case, at its top the burrata cheese BU will usually show, instead of a cut-off area, a sort of flake.

Furthermore, in a large production plant the machine 10 of the invention for burrata cheese production may advantageously be associated or combined with a cooling apparatus adapted to receive and suitably cool down the produced burrata cheeses BU discharged by the machine 10, or with a packaging apparatus adapted to automatically pack the produced burrata cheeses BU, so that they can then be distributed and sold on the market.

Due to the many possible variations of the machine 10, 110 and of the operation thereof described herein by way of example, it can be easily understood that the present invention is not limited to the above-described machine 10, 110 and operation thereof, but may be subject to many modifications, improvements or replacements of equivalent parts and elements without however departing from the inventive idea, as clearly specified in the following claims.

## Claims

1. A machine (10) for producing mozzarella burrata cheese (BU) or similar stuffed cheeses, comprising:
- a hopper (20) adapted to receive and contain dough (P) for forming mozzarella balls (M) to be used for producing mozzarella burrata cheeses (BU); and
- a feeding and extrusion system (30) for receiving the dough (P) from the hopper (20) and feeding and extruding it in the form of "pasta filata" (PF);
wherein said machine (10) further comprises:
- a first forming station (50-1) to form and produce mozzarella burrata cheeses (BU), said first forming station (50-1) comprising a number of through holes (51);
- a second forming station (50-2) to form and produce mozzarella burrata cheeses (BU), said second forming station (50-2) comprising a number of through holes (51);
- a first dosing unit (60-1) adapted to cooperate with said first forming station (50-1) to form and produce the mozzarella burrata cheeses (BU), said first dosing unit (60-1) comprising a number of syringe-shaped spouts or nozzles (61) designed to fill the mozzarella balls with a dosed amount of filling (RI) to form the mozzarella burrata cheeses (BU), which is equal to the number of holes (51) of the first forming station (50-1); and
- discharging means (80) for receiving from the first forming station (50-1) and from the second forming station (50-2) the formed and produced mozzarella burrata cheeses (BU) and discharging them from the machine (10) used for their production,
wherein said machine (10) is **characterized in that** it further comprises:
- a slide (40) having a plurality of sockets (41), in the form of through holes, adapted to receive and be filled with the pasta filata (PF) fed by said feeding and extrusion system (30), so as to form mozzarella balls (M) in the sockets (41) of the slide (40), said plurality of sockets (41) being divided into a first group of sockets (41-1) and a second group of sockets (41-2),
wherein said first forming station (50-1) is adapted to cooperate with said slide (40) to form and produce mozzarella burrata cheeses (BU), said number of through holes (51) of said first forming station (50-1) being adapted to receive the mozzarella balls formed in the first group of sockets (41-1) of the slide (40), and said number of through holes (51) of said first forming station (50-1) being equal to the number of sockets (41) of the first group of sockets (41-1) of the slide (40),
wherein said second forming station (50-2) is adapted to cooperate with said slide (40) to form and produce mozzarella burrata cheeses (BU), said number of through holes (51) of said second forming station (50-2) being adapted to receive the mozzarella balls formed in the second group of sockets (41-2) of the slide (40), and said number of through holes (51) of said second forming station (50-2) being equal to the number of sockets (41) of the second group of sockets (41-2) of the slide (40),
and wherein said first dosing unit (60-1) is adapted to cooperate with said slide (40) to form and produce the mozzarella burrata cheeses (BU), said number of syringe-shaped spouts or nozzles (61) of the first dosing unit (60-1) being equal to the number of sockets, in the form of through holes, of the first group of sockets (41-1) of the slide (40);
- a second dosing unit (60-2) adapted to cooperate with said slide (40) and with said second forming station (50-2) to form and produce the mozzarella burrata cheeses (BU), said second dosing unit (60-2) comprising a number of syringe-shaped spouts or nozzles (61), designed to fill the mozzarella balls with a dosed amount of filling (RI) to form the mozzarella burrata cheeses (BU), which is equal to the number of sockets, in the form of through holes, of said second group of sockets (41-2) of the slide (40), and to the number of holes (51) of the second forming station (50-2);
wherein said slide (40) is adapted to continuously move horizontally forwards and backwards, so as to alternately assume:
- a first operating position (P1), in which the first group of sockets (41-1) of the slide (40) is arranged in the area of the first forming station (50-1) and of the first dosing unit (60-1) to allow the mozzarella balls formed in the first group of sockets (41-1) of the slide (40) to receive and be filled with the filling (RI), by means of the nozzles (61) of the first dosing unit (60-1), while the second dosing unit (60-2) is inactive, and the second group of sockets (41-2) of the slide (40) is arranged in the area of the feeding system (30) to simultaneously receive and be filled with pasta filata (PF), fed by said feeding system (30), so as to form mozzarella balls in the sockets (41) of the second group of sockets (41-2); and
- a second operating position (P2), in which the second group of sockets (41-2) of the slide (40) is arranged in the area of the second forming station (50-2) and of the second dosing unit (60-2) to allow the mozzarella balls formed in the second group of sockets (41-2) of the slide (40) to receive and be filled with the filling (RI), by means of the nozzles (61) of the second dosing unit (60-2), while the first dosing unit (60-1) is inactive, and the first group of sockets (41-1) of the slide (40) is arranged in the area of the feeding system (30) to simultaneously receive and be filled with pasta filata (PF), fed by said feeding system (30), so as to form mozzarella balls in the sockets (41) of the first group of sockets (41-1).

2. Machine (10) according to claim 1, wherein the holes (51) of the first forming station (50-1), adapted to receive the mozzarella balls (M) formed in the sockets (41) of the first group of sockets (41-1) of the slide (40), are each associated with an iris or diaphragm valve (52) and with a lid (53), arranged under the iris valve (52) and defining a seat (53'), in particular cylindrical or hemispherical, for the mozzarella ball (M) and the mozzarella burrata cheese (BU);
wherein the holes (51) of the second forming station (50-2), adapted to receive the mozzarella balls formed in the sockets (41) of the second group od sockets (41-2) of the slide (40), are also each associated with an iris valve (52) and with a lid (53), arranged under the iris valve (52) and defining a seat (53'), in particular cylindrical or hemispherical, for the mozzarella ball (M) and the mozzarella burrata cheese (BU);
wherein the first dosing unit (60-1) is adapted to lower itself from a raised position (P3) to a lowered position (P4) so as to push, by means of the respective nozzles (61), the mozzarella balls (M) formed in the sockets (41) of the first group of sockets (41-1) of the slide (40) into the corresponding seats (53'), equal in number, of the lids (53) of the first forming station (50-1) when the slide (40) is arranged in its first operating position (P1) and while the second dosing unit (60-2) is inactive and also arranged in a respective lowered position (P6) with its nozzles (61) closed;
and wherein the second dosing unit (60-2) is adapted to lower itself from a raised position (P5) to a lowered position (P6) so as to push, by means of the respective nozzles (61), the mozzarella balls (M) formed in the sockets (41) of the second group of sockets (41-2) of the slide (40) into the corresponding seats (53'), equal in number, of the lids (53) of the second forming station (50-2) when the slide (40) is arranged in its second operating position (P2) and while the first dosing unit (60-1) is inactive and also arranged in the respective lowered position (P4) with its nozzles (61) closed;
wherein the iris valves (52), associated with the holes (51) of the first forming station (50-1), are each adapted to assume:
- a completely open configuration, suitable to allow the first dosing unit (60-1), when lowering from the raised position (P3) to the lowered position (P4), to push, by means of the respective nozzles (61), the mozzarella balls formed in the sockets (41) of the first group of sockets (41-1) of the slide (40) into the seats (53') defined by the lids (53) associated with the holes (51) of the first forming station (50-1);
- a partially open configuration, suitable to hold at the top the mozzarella balls (M) arranged in the seats (53') of the first forming station (50-1) as the first dosing unit (60-1) fills, by means of the respective nozzles (61), the same mozzarella balls (M) with a dosed amount of filling (RI) to inflate them and form the mozzarella burrata cheeses (BU); and
- a completely closed configuration, so as to cause the mozzarella burrata cheeses (BU), once formed, to be cut off and consequently detached from an excess residual upper part or knot; or
- a partially closed configuration, so as to seal the mozzarella burrata cheeses (BU) while leaving a flake-shaped upper portion or head in the produced mozzarella burrata cheese (BU);
wherein the lids (53), associated with the holes (51) of the first forming station (50-1), are pivotally mounted on a fixed structure (10') of the machine (10), so as to be able to rotate between a closed position, in which the lids (53) close said holes (51) and receive and retain, in the seats (53') defined by the same lids (53), the mozzarella balls, thus preventing them from falling, and an open position, in which the lids (53) open said holes (51), so as to release downwards from said seats (53') the formed mozzarella burrata cheeses (BU) detached from the iris valves (52) in the closed configuration;
wherein the iris valves (52), associated with the holes (51) of the second forming station (50-2), are each adapted to assume:
- a completely open configuration, suitable to allow the second dosing unit (60-2), when lowering from the raised position (P5) to the lowered position (P6), to push, by means of the respective nozzles (61), the mozzarella balls formed in the sockets (41) of the second group of sockets (41-2) of the slide (40) into the seats (53') defined by the lids (53) associated with the holes (51) of the second forming station (50-2);
- a partially open configuration, suitable to hold at the top the mozzarella balls arranged in the seats (53') of the second forming station (50-2) as the second dosing unit (60-2) fills, by means of the respective nozzles (61) the same mozzarella balls (M) with a dosed amount of filling (RI) to inflate them and form the mozzarella burrata cheeses (BU); and
- a completely closed configuration, so as to cause the mozzarella burrata cheeses (BU), once formed, to be cut off and consequently detached from an excess residual upper part or knot; or
- a partially closed configuration, so as to seal the mozzarella burrata cheeses (BU) while leaving a flake-shaped upper portion or head in the produced mozzarella burrata cheese (BU);
wherein the lids (53), associated with the holes (51) of the second forming station (50-2), are pivotally mounted on a fixed structure (10') of the machine (10), so as to be able to rotate between a closed position, in which the lids (53) close said holes (51) and receive and retain, in the seats (53') defined by the same lids (53), the mozzarella balls, thus preventing them from falling, and an open position, in which the lids (53) open said holes (51), so as to release downwards from said seats (53') the formed burrata cheeses (BU) detached from the iris valves (52) in the closed configuration;
wherein the first dosing unit (60-1), after having filled the mozzarella balls with the filling (RI) and dosed it, is adapted to rise from the lowered position (P4) so as to move the respective nozzles (61) away from the area of the first forming station (50-1), while at the same time the iris valves (52) associated with the holes (51) of the first forming station (50-1) assume the closed configuration to cause the detachment of the mozzarella burrata cheeses (BU), thereby allowing them to be released from the first forming station (50-1); and
wherein the second dosing unit (60-2), after having filled the mozzarella balls with the filling (RI) and dosed it, is adapted to rise from the lowered position (P6) so as to move the respective nozzles (61) away from the area of the second forming station (50-2), while at the same time the iris valves (52) associated with the holes (51) of the second forming station (50-2) assume the closed configuration to cause the detachment of the mozzarella burrata cheeses (BU), thereby allowing them to be released from the second forming station (50-2).

3. Machine (10) according to one or more of the preceding claims, wherein said discharging means (80) comprise a conveyor belt (81) adapted to receive from above the mozzarella burrata cheeses (BU), once formed and produced, from the first and second forming stations (50-1, 50-2), and to transport them outside the machine (10) used for their production.

4. Machine (10) according to claim 3, wherein said conveyor belt (81) is adapted to move vertically between:
- a raised position (P7), adjacent to the holes (51) of the first and second forming stations (50-1, 50-2), for receiving the mozzarella burrata cheeses (BU) from the seats (53') defined by the lids (53) associated with said holes (51), when said lids (53) are rotated to assume the respective open position; and
- a lowered position (P8), with respect to said raised position (P7), so as to move away from the first and second forming stations (50-1, 50-2) the mozzarella burrata cheeses (BU) received from said seats (53') defined by the rotatable lids (53) of the first and second forming stations (50-1, 50-2);
wherein said conveyor belt (81), when arranged in said lowered position (P8), is adapted to move intermittently, in synchronism with the phases of forming the mozzarella burrata cheeses (BU), in order to discharge from the machine (10) the mozzarella burrata cheeses (BU) received from the first and second forming stations (50-1, 50-2) and deposited on said conveyor belt (81); and
wherein said conveyor belt (81) includes a plurality of seats (82), in particular in the form of cups, adapted to receive, from said seats (53') of the first and second forming stations (50-1, 50-2), the formed mozzarella burrata cheeses (BU) and lodge them stably so that they cannot fall off the conveyor belt (81) as it moves.

5. Machine (10) according to any one of the preceding claims, wherein the first group of sockets (41-1) and the second group of sockets (41-2), in the form of through holes, of the slide (40) include six sockets (41) each,
wherein the first forming station (50-1) and the second forming station (50-2) comprise each six seats (51), in the form of through holes, adapted to receive and house the mozzarella balls formed in the sockets (41) of the slide (40),
and wherein the first dosing unit (60-1) and the second dosing unit (60-2) comprise each six spouts or nozzles (61) for filling the mozzarella balls arranged in the seats (51) of the first (50-1) and second (50-2) forming stations.

6. Machine (10) according to any one of the preceding claims, wherein said feeding and extrusion system (30) is of the screw type.

7. Machine (10) according to any one of the preceding claims, further comprising a pumping unit (70) performing the function of pumping and feeding the filling (RI), in the form of stracciatella or cream, to the first (60-1) and second (60-2) dosing units, in order to form and produce the mozzarella burrata cheeses (BU), wherein said pumping unit (70) in turn comprises:
- a hopper (71) adapted to receive and be filled with the filling (RI),
- a pumping system (72) including a plurality of plungers (72a), in particular electrically operated, adapted to pump and feed the filling (RI) coming from the hopper (71) to the dosing units (60-1, 60-2); and
- a valve system (73), interposed between said hopper (71) and said pumping system (72), for selectively controlling the feeding of the filling (RI), contained in the hopper (71), to the plungers (72a) of said pumping system (72).

8. Process for producing mozzarella burrata cheese (BU), comprising the following steps:
- providing a machine (10) for producing mozzarella burrata cheese (BU) according to any one of claims 1 to 7; and
- alternately moving the slide (40), included in said machine (10), between two opposite operating positions (P1, P2), in which the slide (40) cooperates with the first forming station (50-1) and the first dosing unit (60-1) and, respectively, with the second forming station (50-2) and the second dosing unit (60-2) of said machine (10) to cyclically produce a given number of burrata cheeses (BU).

9. Process according to claim 8, further comprising a step of alternately discharging the burrata cheeses produced in said first forming station (50-1) and in said second forming station (50-2).

10. Process according to claim 9, wherein said step of discharging is carried out by cyclically moving suitable discharging means (80, 81, 82) towards and away from said first (50-1) and second (50-2) forming stations where the burrata cheeses (BU) have been formed and produced.

## Patentansprüche

1. Maschine (10) zur Herstellung von Mozzarella-Burrata-Käse (BU) oder ähnlichen gefüllten Käsen, umfassend:
- einen Trichter (20), der dazu ausgelegt ist, Teig (P) zur Bildung von Mozzarellabällchen (M) aufzunehmen und zu enthalten, die zur Herstellung von Mozzarella-Burrata-Käsen (BU) verwendet werden sollen; und
- ein Zufuhr- und Extrusionssystem (30) zum Aufnehmen des Teigs (P) aus dem Trichter (20) und zum Zuführen und Extrudieren desselben in Form von Pasta filata (PF);
wobei die genannte Maschine (10) ferner umfasst:
- eine erste Formstation (50-1) zum Formen und Herstellen von Mozzarella-Burrata-Käsen (BU), wobei die genannte erste Formstation (50-1) eine Anzahl von Durchgangslöchern (51) umfasst;
- eine zweite Formstation (50-2) zum Formen und Herstellen von Mozzarella-Burrata-Käsen (BU), wobei die genannte zweite Formstation (50-2) eine Anzahl von Durchgangslöchern (51) umfasst;
- eine erste Dosiereinheit (60-1), die dazu ausgelegt ist, mit der genannten ersten Formstation (50-1) zusammenzuwirken, um die Mozzarella-Burrata-Käse (BU) zu formen und herzustellen, wobei die genannte erste Dosiereinheit (60-1) eine Anzahl von spritzenförmigen Ausläufen oder Düsen (61) umfasst, die dazu ausgelegt sind, die Mozzarellabällchen mit einer dosierten Menge Füllung (RI) zu befüllen, um die Mozzarella-Burrata-Käse (BU) zu formen, welche gleich der Anzahl der Löcher (51) der ersten Formstation (50-1) ist; und
- Entlademittel (80) zum Aufnehmen der geformten und hergestellten Mozzarella-Burrata-Käse (BU) aus der ersten Formstation (50-1) und aus der zweiten Formstation (50-2) und zum Entladen derselben aus der für ihre Herstellung verwendeten Maschine (10),
wobei die genannte Maschine (10) **dadurch gekennzeichnet ist, dass** sie ferner umfasst:
- einen Schieber (40) mit einer Mehrzahl von Buchsen (41) in Form von Durchgangslöchern, die dazu ausgelegt sind, die vom genannten Zufuhr- und Extrusionssystem (30) zugeführte Pasta filata (PF) aufzunehmen und damit befüllt zu werden, um Mozzarellabällchen (M) in den Buchsen (41) des Schiebers (40) zu formen, wobei die genannte Mehrzahl von Buchsen (41) in eine erste Gruppe von Buchsen (41-1) und eine zweite Gruppe von Buchsen (41-2) unterteilt ist,
wobei die genannte erste Formstation (50-1) dazu ausgelegt ist, mit dem genannten Schieber (40) zusammenzuwirken, um Mozzarella-Burrata-Käse (BU) zu formen und herzustellen, wobei die genannte Anzahl von Durchgangslöchern (51) der genannten ersten Formstation (50-1) dazu ausgelegt ist, die in der ersten Gruppe von Buchsen (41-1) des Schiebers (40) geformten Mozzarellabällchen aufzunehmen, und wobei die genannte Anzahl von Durchgangslöchern (51) der genannten ersten Formstation (50-1) gleich der Anzahl der Buchsen (41) der ersten Gruppe von Buchsen (41-1) des Schiebers (40) ist,
wobei die genannte zweite Formstation (50-2) dazu ausgelegt ist, mit dem genannten Schieber (40) zusammenzuwirken, um Mozzarella-Burrata-Käse (BU) zu formen und herzustellen, wobei die genannte Anzahl von Durchgangslöchern (51) der genannten zweiten Formstation (50-2) dazu ausgelegt ist, die in der zweiten Gruppe von Buchsen (41-2) des Schiebers (40) geformten Mozzarellabällchen aufzunehmen, und wobei die genannte Anzahl von Durchgangslöchern (51) der genannten zweiten Formstation (50-2) gleich der Anzahl der Buchsen (41) der zweiten Gruppe von Buchsen (41-2) des Schiebers (40) ist,
und wobei die genannte erste Dosiereinheit (60-1) dazu ausgelegt ist, mit dem genannten Schieber (40) zusammenzuwirken, um die Mozzarella-Burrata-Käse (BU) zu formen und herzustellen, wobei die genannte Anzahl von spritzenförmigen Ausläufen oder Düsen (61) der ersten Dosiereinheit (60-1) gleich der Anzahl der Buchsen in Form von Durchgangslöchern der ersten Gruppe von Buchsen (41-1) des Schiebers (40) ist;
- eine zweite Dosiereinheit (60-2), die dazu ausgelegt ist, mit dem genannten Schieber (40) und mit der genannten zweiten Formstation (50-2) zusammenzuwirken, um die Mozzarella-Burrata-Käse (BU) zu formen und herzustellen, wobei die genannte zweite Dosiereinheit (60-2) eine Anzahl von spritzenförmigen Ausläufen oder Düsen (61) umfasst, die dazu ausgelegt sind, die Mozzarellabällchen mit einer dosierten Menge Füllung (RI) zu befüllen, um die Mozzarella-Burrata-Käse (BU) zu formen, welche gleich der Anzahl der Buchsen in Form von Durchgangslöchern der genannten zweiten Gruppe von Buchsen (41-2) des Schiebers (40) und gleich der Anzahl der Löcher (51) der zweiten Formstation (50-2) ist;
wobei der genannte Schieber (40) dazu ausgelegt ist, sich horizontal kontinuierlich vor- und rückwärts zu bewegen, um abwechselnd einzunehmen:
- eine erste Betriebsstellung (P1), in der die erste Gruppe von Buchsen (41-1) des Schiebers (40) im Bereich der ersten Formstation (50-1) und der ersten Dosiereinheit (60-1) angeordnet ist, um zu ermöglichen, dass die in der ersten Gruppe von Buchsen (41-1) des Schiebers (40) geformten Mozzarellabällchen die Füllung (RI) mittels der Düsen (61) der ersten Dosiereinheit (60-1) aufnehmen und damit befüllt werden, während die zweite Dosiereinheit (60-2) inaktiv ist, und die zweite Gruppe von Buchsen (41-2) des Schiebers (40) im Bereich des Zufuhrsystems (30) angeordnet ist, um gleichzeitig Pasta filata (PF), die vom genannten Zufuhrsystem (30) zugeführt wird, aufzunehmen und damit befüllt zu werden, um Mozzarellabällchen in den Buchsen (41) der zweiten Gruppe von Buchsen (41-2) zu formen; und
- eine zweite Betriebsstellung (P2), in der die zweite Gruppe von Buchsen (41-2) des Schiebers (40) im Bereich der zweiten Formstation (50-2) und der zweiten Dosiereinheit (60-2) angeordnet ist, um zu ermöglichen, dass die in der zweiten Gruppe von Buchsen (41-2) des Schiebers (40) geformten Mozzarellabällchen die Füllung (RI) mittels der Düsen (61) der zweiten Dosiereinheit (60-2) aufnehmen und damit befüllt werden, während die erste Dosiereinheit (60-1) inaktiv ist, und die erste Gruppe von Buchsen (41-1) des Schiebers (40) im Bereich des Zufuhrsystems (30) angeordnet ist, um gleichzeitig Pasta filata (PF), die vom genannten Zufuhrsystem (30) zugeführt wird, aufzunehmen und damit befüllt zu werden, um Mozzarellabällchen in den Buchsen (41) der ersten Gruppe von Buchsen (41-1) zu formen.

2. Maschine (10) gemäß Anspruch 1, wobei die Löcher (51) der ersten Formstation (50-1), die dazu ausgelegt sind, die in den Buchsen (41) der ersten Gruppe von Buchsen (41-1) des Schiebers (40) geformten Mozzarellabällchen (M) aufzunehmen, jeweils mit einem Irisventil oder Membranventil (52) und mit einem Deckel (53) versehen sind, der unter dem Irisventil (52) angeordnet ist und einen Sitz (53'), insbesondere zylindrischen oder halbkugelförmigen, für das Mozzarellabällchen (M) und den Mozzarella-Burrata-Käse (BU) definiert;
wobei die Löcher (51) der zweiten Formstation (50-2), die dazu ausgelegt sind, die in den Buchsen (41) der zweiten Gruppe von Buchsen (41-2) des Schiebers (40) geformten Mozzarellabällchen aufzunehmen, ebenfalls jeweils mit einem Irisventil (52) und mit einem Deckel (53) versehen sind, der unter dem Irisventil (52) angeordnet ist und einen Sitz (53'), insbesondere zylindrischen oder halbkugelförmigen, für das Mozzarellabällchen (M) und den Mozzarella-Burrata-Käse (BU) definiert;
wobei die erste Dosiereinheit (60-1) dazu ausgelegt ist, sich von einer angehobenen Stellung (P3) in eine abgesenkte Stellung (P4) zu senken, um mittels der jeweiligen Düsen (61) die in den Buchsen (41) der ersten Gruppe von Buchsen (41-1) des Schiebers (40) geformten Mozzarellabällchen (M) in die entsprechenden, der Anzahl nach gleichen Sitze (53') der Deckel (53) der ersten Formstation (50-1) zu schieben, wenn der Schieber (40) in seiner ersten Betriebsstellung (P1) angeordnet ist und während die zweite Dosiereinheit (60-2) inaktiv ist und ebenfalls in einer jeweiligen abgesenkten Stellung (P6) mit geschlossenen Düsen (61) angeordnet ist;
und wobei die zweite Dosiereinheit (60-2) dazu ausgelegt ist, sich von einer angehobenen Stellung (P5) in eine abgesenkte Stellung (P6) zu senken, um mittels der jeweiligen Düsen (61) die in den Buchsen (41) der zweiten Gruppe von Buchsen (41-2) des Schiebers (40) geformten Mozzarellabällchen (M) in die entsprechenden, der Anzahl nach gleichen Sitze (53') der Deckel (53) der zweiten Formstation (50-2) zu schieben, wenn der Schieber (40) in seiner zweiten Betriebsstellung (P2) angeordnet ist und während die erste Dosiereinheit (60-1) inaktiv ist und ebenfalls in der jeweiligen abgesenkten Stellung (P4) mit geschlossenen Düsen (61) angeordnet ist;
wobei die Irisventile (52), die den Löchern (51) der ersten Formstation (50-1) zugeordnet sind, jeweils dazu ausgelegt sind, einzunehmen:
- eine vollständig geöffnete Konfiguration, geeignet, um der ersten Dosiereinheit (60-1) beim Absenken von der angehobenen Stellung (P3) in die abgesenkte Stellung (P4) zu ermöglichen, mittels der jeweiligen Düsen (61) die in den Buchsen (41) der ersten Gruppe von Buchsen (41-1) des Schiebers (40) geformten Mozzarellabällchen in die Sitze (53') zu schieben, die durch die den Löchern (51) der ersten Formstation (50-1) zugeordneten Deckel (53) definiert werden;
- eine teilweise geöffnete Konfiguration, geeignet, um die in den Sitzen (53') der ersten Formstation (50-1) angeordneten Mozzarellabällchen (M) oben zu halten, während die erste Dosiereinheit (60-1) mittels der jeweiligen Düsen (61) dieselben Mozzarellabällchen (M) mit einer dosierten Menge Füllung (RI) befüllt, um sie aufzublasen und die Mozzarella-Burrata-Käse (BU) zu formen; und
- eine vollständig geschlossene Konfiguration, um die einmal geformten Mozzarella-Burrata-Käse (BU) abzutrennen und dadurch von einem überschüssigen oberen Teil oder Knoten zu lösen; oder
- eine teilweise geschlossene Konfiguration, um die Mozzarella-Burrata-Käse (BU) zu versiegeln, wobei ein flockiger oberer Abschnitt oder Kopf im hergestellten Mozzarella-Burrata-Käse (BU) verbleibt;
wobei die Deckel (53), die den Löchern (51) der ersten Formstation (50-1) zugeordnet sind, schwenkbar an einer festen Struktur (10') der Maschine (10) angebracht sind, sodass sie zwischen einer geschlossenen Stellung, in der die Deckel (53) die genannten Löcher (51) schließen und die Mozzarellabällchen in den durch dieselben Deckel (53) definierten Sitzen (53') aufnehmen und halten, sodass diese nicht herunterfallen können, und einer offenen Stellung rotieren können, in der die Deckel (53) die genannten Löcher (51) öffnen, um die geformten Mozzarella-Burrata-Käse (BU), die von den Irisventilen (52) in der geschlossenen Konfiguration gelöst wurden, aus den genannten Sitzen (53') nach unten freizugeben; wobei die Irisventile (52), die den Löchern (51) der zweiten Formstation (50-2) zugeordnet sind, jeweils dazu ausgelegt sind, einzunehmen:
- eine vollständig geöffnete Konfiguration, geeignet, um der zweiten Dosiereinheit (60-2) beim Absenken von der angehobenen Stellung (P5) in die abgesenkte Stellung (P6) zu ermöglichen, mittels der jeweiligen Düsen (61) die in den Buchsen (41) der zweiten Gruppe von Buchsen (41-2) des Schiebers (40) geformten Mozzarellabällchen in die Sitze (53') zu schieben, die durch die den Löchern (51) der zweiten Formstation (50-2) zugeordneten Deckel (53) definiert werden;
- eine teilweise geöffnete Konfiguration, geeignet, um die in den Sitzen (53') der zweiten Formstation (50-2) angeordneten Mozzarellabällchen oben zu halten, während die zweite Dosiereinheit (60-2) mittels der jeweiligen Düsen (61) dieselben Mozzarellabällchen (M) mit einer dosierten Menge Füllung (RI) befüllt, um sie aufzublasen und die Mozzarella-Burrata-Käse (BU) zu formen; und
- eine vollständig geschlossene Konfiguration, um die einmal geformten Mozzarella-Burrata-Käse (BU) abzutrennen und dadurch von einem überschüssigen oberen Teil oder Knoten zu lösen; oder
- eine teilweise geschlossene Konfiguration, um die Mozzarella-Burrata-Käse (BU) zu versiegeln, wobei ein flockiger oberer Abschnitt oder Kopf im hergestellten Mozzarella-Burrata-Käse (BU) verbleibt;
wobei die Deckel (53), die den Löchern (51) der zweiten Formstation (50-2) zugeordnet sind, schwenkbar an einer festen Struktur (10') der Maschine (10) angebracht sind, sodass sie zwischen einer geschlossenen Stellung, in der die Deckel (53) die genannten Löcher (51) schließen und die Mozzarellabällchen in den durch dieselben Deckel (53) definierten Sitzen (53') aufnehmen und halten, sodass diese nicht herunterfallen können, und einer offenen Stellung rotieren können, in der die Deckel (53) die genannten Löcher (51) öffnen, um die geformten Burrata-Käse (BU), die von den Irisventilen (52) in der geschlossenen Konfiguration gelöst wurden, aus den genannten Sitzen (53') nach unten freizugeben;
wobei die erste Dosiereinheit (60-1), nachdem sie die Mozzarellabällchen mit der Füllung (RI) befüllt und diese dosiert hat, dazu ausgelegt ist, sich aus der abgesenkten Stellung (P4) anzuheben, um die jeweiligen Düsen (61) vom Bereich der ersten Formstation (50-1) wegzubewegen, während gleichzeitig die den Löchern (51) der ersten Formstation (50-1) zugeordneten Irisventile (52) die geschlossene Konfiguration einnehmen, um die Ablösung der Mozzarella-Burrata-Käse (BU) zu bewirken und dadurch deren Freigabe aus der ersten Formstation (50-1) zu ermöglichen; und
wobei die zweite Dosiereinheit (60-2), nachdem sie die Mozzarellabällchen mit der Füllung (RI) befüllt und diese dosiert hat, dazu ausgelegt ist, sich aus der abgesenkten Stellung (P6) anzuheben, um die jeweiligen Düsen (61) vom Bereich der zweiten Formstation (50-2) wegzubewegen, während gleichzeitig die den Löchern (51) der zweiten Formstation (50-2) zugeordneten Irisventile (52) die geschlossene Konfiguration einnehmen, um die Ablösung der Mozzarella-Burrata-Käse (BU) zu bewirken und dadurch deren Freigabe aus der zweiten Formstation (50-2) zu ermöglichen.

3. Maschine (10) gemäß einem oder mehreren der vorherigen Ansprüche, wobei die genannten Entlademittel (80) ein Förderband (81) umfassen, das dazu ausgelegt ist, die einmal geformten und hergestellten Mozzarella-Burrata-Käse (BU) von oben aus der ersten und zweiten Formstation (50-1, 50-2) aufzunehmen und sie außerhalb der für ihre Herstellung verwendeten Maschine (10) zu transportieren.

4. Maschine (10) gemäß Anspruch 3, wobei das genannte Förderband (81) dazu ausgelegt ist, sich vertikal zu bewegen zwischen:
- einer angehobenen Stellung (P7), benachbart zu den Löchern (51) der ersten und zweiten Formstation (50-1, 50-2), zum Aufnehmen der Mozzarella-Burrata-Käse (BU) aus den Sitzen (53'), die durch die den genannten Löchern (51) zugeordneten Deckel (53) definiert werden, wenn die genannten Deckel (53) gedreht werden, um die jeweilige offene Stellung einzunehmen; und
- einer abgesenkten Stellung (P8), bezogen auf die genannte angehobene Stellung (P7), um die aus den genannten Sitzen (53'), die durch die schwenkbaren Deckel (53) der ersten und zweiten Formstation (50-1, 50-2) definiert werden, aufgenommenen Mozzarella-Burrata-Käse (BU) von der ersten und zweiten Formstation (50-1, 50-2) wegzubewegen;
wobei das genannte Förderband (81), wenn es in der genannten abgesenkten Stellung (P8) angeordnet ist, dazu ausgelegt ist, sich intermittierend zu bewegen, synchron mit den Phasen des Formens der Mozzarella-Burrata-Käse (BU), um die von der ersten und zweiten Formstation (50-1, 50-2) aufgenommenen und auf dem genannten Förderband (81) abgelegten Mozzarella-Burrata-Käse (BU) aus der Maschine (10) auszutragen; und wobei das genannte Förderband (81) eine Mehrzahl von Sitzen (82), insbesondere in Form von Bechern, umfasst, die dazu ausgelegt sind, die geformten Mozzarella-Burrata-Käse (BU) aus den genannten Sitzen (53') der ersten und zweiten Formstation (50-1, 50-2) aufzunehmen und stabil unterzubringen, sodass sie beim Bewegen des Förderbandes (81) nicht herunterfallen können.

5. Maschine (10) gemäß einem der vorherigen Ansprüche, wobei die erste Gruppe von Buchsen (41-1) und die zweite Gruppe von Buchsen (41-2) in Form von Durchgangslöchern des Schiebers (40) jeweils sechs Buchsen (41) umfassen,
wobei die erste Formstation (50-1) und die zweite Formstation (50-2) jeweils sechs Sitze (51) in Form von Durchgangslöchern umfassen, die dazu ausgelegt sind, die in den Buchsen (41) des Schiebers (40) geformten Mozzarellabällchen aufzunehmen und aufzubehalten,
und wobei die erste Dosiereinheit (60-1) und die zweite Dosiereinheit (60-2) jeweils sechs Ausläufe oder Düsen (61) zum Befüllen der in den Sitzen (51) der ersten (50-1) und zweiten (50-2) Formstation angeordneten Mozzarellabällchen umfassen.

6. Maschine (10) gemäß einem der vorherigen Ansprüche, wobei das genannte Zufuhr- und Extrusionssystem (30) vom Schneckentyp ist.

7. Maschine (10) gemäß einem der vorherigen Ansprüche, ferner umfassend eine Pumpeinheit (70), die die Funktion übernimmt, die Füllung (RI) in Form von Stracciatella oder Sahne zu pumpen und den ersten (60-1) und zweiten (60-2) Dosiereinheiten zuzuführen, um die Mozzarella-Burrata-Käse (BU) zu formen und herzustellen, wobei die genannte Pumpeinheit (70) ihrerseits umfasst:
- einen Trichter (71), der dazu ausgelegt ist, die Füllung (RI) aufzunehmen und damit befüllt zu werden,
- ein Pumpsystem (72), das eine Mehrzahl von Kolben (72a), insbesondere elektrisch betätigten, umfasst, die dazu ausgelegt sind, die vom Trichter (71) kommende Füllung (RI) zu pumpen und den Dosiereinheiten (60-1, 60-2) zuzuführen; und
- ein Ventilsystem (73), das zwischen dem genannten Trichter (71) und dem genannten Pumpsystem (72) zwischengeschaltet ist, zur selektiven Steuerung der Zufuhr der im Trichter (71) enthaltenen Füllung (RI) zu den Kolben (72a) des genannten Pumpsystems (72).

8. Verfahren zur Herstellung von Mozzarella-Burrata-Käse (BU), umfassend die folgenden Schritte:
- Bereitstellen einer Maschine (10) zur Herstellung von Mozzarella-Burrata-Käse (BU) gemäß einem der Ansprüche 1 bis 7; und
- abwechselndes Bewegen des in der genannten Maschine (10) enthaltenen Schiebers (40) zwischen zwei entgegengesetzten Betriebsstellungen (P1, P2), in denen der Schieber (40) mit der ersten Formstation (50-1) und der ersten Dosiereinheit (60-1) bzw. mit der zweiten Formstation (50-2) und der zweiten Dosiereinheit (60-2) der genannten Maschine (10) zusammenwirkt, um eine bestimmte Anzahl von Burrata-Käsen (BU) zyklisch herzustellen.

9. Verfahren gemäß Anspruch 8, ferner umfassend einen Schritt des abwechselnden Entladens der in der genannten ersten Formstation (50-1) und in der genannten zweiten Formstation (50-2) hergestellten Burrata-Käse.

10. Verfahren gemäß Anspruch 9, wobei der genannte Entladeschritt durch zyklisches Bewegen geeigneter Entlademittel (80, 81, 82) auf die genannte erste (50-1) und zweite (50-2) Formstation zu und von ihnen weg durchgeführt wird, wo die Burrata-Käse (BU) geformt und hergestellt wurden.

## Revendications

1. - Machine (10) de production de fromage de type mozzarella burrata (BU) ou de fromages farcies similaires, comprenant :
- une trémie (20) conçue pour recevoir et contenir de la pâte (P) pour former des billes de mozzarella (M) à utiliser pour produire des fromages de type mozzarella burrata (BU) ; et
- un système d'alimentation et d'extrusion (30) pour recevoir la pâte (P) provenant de la trémie (20) et à l'alimenter et l'extruder sous la forme de « pâte filée » (PF) ;
dans laquelle ladite machine (10) comprend en outre :
- une première station de formage (50-1) afin de former et de produire des fromages de type mozzarella burrata (BU), ladite première station de formage (50-1) comprenant un certain nombre de trous traversants (51) ;
- une seconde station de formage (50-2) afin de former et de produire des fromages de type mozzarella burrata (BU), ladite seconde station de formage (50-2) comprenant une pluralité de trous traversants (51) ;
- une première unité de dosage (60-1) conçue pour coopérer avec ladite première station de formage (50-1) afin de former et de produire les fromages de type mozzarella burrata (BU), ladite première unité de dosage (60-1) comprenant un certain nombre de becs ou buses en forme de seringue (61) conçus pour remplir les billes de mozzarella avec une quantité dosée de garniture (RI) afin de former les fromages de type mozzarella burrata (BU), qui est égal au nombre de trous (51) de la première station de formage (50-1) ; et
- des moyens de déchargement (80) pour recevoir, depuis la première station de formage (50-1) et depuis la seconde station de formage (50-2), les fromages de type mozzarella burrata (BU) formés et produits, et pour les décharger de la machine (10) utilisée pour leur production,
dans laquelle ladite machine (10) est **caractérisée par le fait qu'**elle comprend en outre :
- un coulisseau (40) ayant une pluralité de cavités (41), sous la forme de trous traversants, conçues pour recevoir et être remplies de la pâte filée (PF) alimentée par ledit système d'alimentation et d'extrusion (30), de manière à former des billes de mozzarella (M) dans les cavités (41) du coulisseau (40), ladite pluralité de cavités (41) étant divisée en un premier groupe de cavités (41-1) et en un second groupe de cavités (41-2) ;
dans laquelle ladite première station de formage (50-1) est conçue pour coopérer avec ledit coulisseau (40) afin de former et de produire des fromages de type mozzarella burrata (BU), ledit nombre de trous traversants (51) de ladite première station de formage (50-1) étant conçu pour recevoir les billes de mozzarella formées dans le premier groupe de cavités (41-1) du coulisseau (40), et ledit nombre de trous traversants (51) de ladite première station de formage (50-1) étant égal au nombre de cavités (41) du premier groupe de cavités (41-1) du coulisseau (40),
dans laquelle ladite seconde station de formage (50-2) est conçue pour coopérer avec ledit coulisseau (40) afin de former et de produire des fromages de type mozzarella burrata (BU), ledit nombre de trous traversants (51) de ladite seconde station de formage (50-2) étant conçu pour recevoir les billes de mozzarella formées dans le second groupe de cavités (41-2) du coulisseau (40), et ledit nombre de trous traversants (51) de ladite seconde station de formage (50-2) étant égal au nombre de cavités (41) du second groupe de cavités (41-2) du coulisseau (40), et
dans laquelle ladite première unité de dosage (60-1) est conçue pour coopérer avec ledit coulisseau (40) afin de former et de produire les fromages de type mozzarella burrata (BU), ledit nombre de becs ou buses en forme de seringue (61) de la première unité de dosage (60-1) étant égal au nombre de cavités, sous la forme de trous traversants, du premier groupe de cavités (41-1) du coulisseau (40) ;
- une seconde unité de dosage (60-2) conçue pour coopérer avec ledit coulisseau (40) et avec ladite seconde station de formage (50-2) afin de former et de produire les fromages de type mozzarella burrata (BU), ladite seconde unité de dosage (60-2) comprenant un certain nombre de becs ou buses en forme de seringue (61), conçus pour remplir les billes de mozzarella avec une quantité dosée de garniture (RI) afin de former les fromages de type mozzarella burrata (BU), qui est égal au nombre de cavités, sous la forme de trous traversants, dudit second groupe de cavités (41-2) du coulisseau (40), et au nombre de trous (51) de la seconde station de formage (50-2) ;
dans laquelle ledit coulisseau (40) est conçu pour se déplacer horizontalement en continu vers l'avant et vers l'arrière, de manière à prendre alternativement :
- une première position de fonctionnement (P1), dans laquelle le premier groupe de cavités (41-1) du coulisseau (40) est disposé dans la zone de la première station de formage (50-1) et de la première unité de dosage (60-1) pour permettre aux billes de mozzarella formées dans le premier groupe de cavités (41-1) du coulisseau (40) de recevoir et d'être remplies de la garniture (RI), au moyen des buses (61) de la première unité de dosage (60-1), tandis que la seconde unité de dosage (60-2) est inactive, et le second groupe de cavités (41-2) du coulisseau (40) est disposé dans la zone du système d'alimentation (30) pour simultanément recevoir et être remplies de pâte filée (PF), alimentée par ledit système d'alimentation (30), de manière à former des billes de mozzarella dans les cavités (41) du second groupe de cavités (41-2) ; et
- une seconde position de fonctionnement (P2), dans laquelle le second groupe de cavités (41-2) du coulisseau (40) est disposé dans la zone de la seconde station de formage (50-2) et de la seconde unité de dosage (60-2) afin de permettre aux billes de mozzarella formées dans le second groupe de cavités (41-2) du coulisseau (40) de recevoir et d'être remplies de la garniture (RI), au moyen des buses (61) de la seconde unité de dosage (60-2), tandis que la première unité de dosage (60-1) est inactive, et le premier groupe de cavités (41-1) du coulisseau (40) est disposé dans la zone du système d'alimentation (30) pour simultanément recevoir et être remplies de pâte filée (PF), alimentée par ledit système d'alimentation (30), de manière à former des billes de mozzarella dans les cavités (41) du premier groupe de cavités (41-1).

2. - Machine (10) selon la revendication 1, dans laquelle les trous (51) de la première station de formage (50-1), conçus pour recevoir les billes de mozzarella (M) formées dans les cavités (41) du premier groupe de cavités (41-1) du coulisseau (40), sont chacun associés à une vanne de type iris ou à diaphragme (52) et à un couvercle (53), disposé sous la vanne de type iris (52) et définissant un siège (53'), en particulier cylindrique ou hémisphérique, pour la bille de mozzarella (M) et le fromage de type mozzarella burrata (BU) ;
dans laquelle les trous (51) de la seconde station de formage (50-2), conçus pour recevoir les billes de mozzarella formées dans les cavités (41) du second groupe de cavités (41-2) du coulisseau (40), sont également chacun associés à une vanne de type iris (52) et à un couvercle (53), disposé sous la vanne de type iris (52) et définissant un siège (53'), en particulier cylindrique ou hémisphérique, pour la bille de mozzarella (M) et le fromage de type mozzarella burrata (BU) ;
dans laquelle la première unité de dosage (60-1) est conçue pour s'abaisser d'une position relevée (P3) à une position abaissée (P4) de manière à pousser, au moyen des buses respectives (61), les billes de mozzarella (M) formées dans les cavités (41) du premier groupe de cavités (41-1) du coulisseau (40) dans les sièges correspondants (53'), en nombre égal, des couvercles (53) de la première station de formage (50-1) lorsque le coulisseau (40) est disposé dans sa première position de fonctionnement (P1) et tandis que la seconde unité de dosage (60-2) est inactive et également disposée dans une position abaissée respective (P6) avec ses buses (61) fermées ; et
dans laquelle la seconde unité de dosage (60-2) est conçue pour s'abaisser d'une position relevée (P5) à une position abaissée (P6) de manière à pousser, au moyen des buses respectives (61), les billes de mozzarella (M) formées dans les cavités (41) du second groupe de cavités (41-2) du coulisseau (40) dans les sièges correspondants (53'), en nombre égal, des couvercles (53) de la seconde station de formage (50-2) lorsque le coulisseau (40) est disposé dans sa seconde position de fonctionnement (P2) et tandis que la première unité de dosage (60-1) est inactive et également disposée dans la position abaissée respective (P4) avec ses buses (61) fermées ;
dans laquelle les vannes de type iris (52), associées aux trous (51) de la première station de formage (50-1), sont chacune conçues pour prendre :
- une configuration complètement ouverte, appropriée pour permettre à la première unité de dosage (60-1), lorsqu'elle s'abaisse de la position relevée (P3) à la position abaissée (P4), de pousser, au moyen des buses respectives (61), les billes de mozzarella formées dans les cavités (41) du premier groupe de cavités (41-1) du coulisseau (40) dans les sièges (53') définis par les couvercles (53) associés aux trous (51) de la première station de formage (50-1) ;
- une configuration partiellement ouverte, appropriée pour maintenir au sommet les billes de mozzarella (M) disposées dans les sièges (53') de la première station de formage (50-1) pendant que la première unité de dosage (60-1) remplit, au moyen des buses respectives (61), les mêmes billes de mozzarella (M) avec une quantité dosée de garniture (RI) afin de les gonfler et de former les fromages de type mozzarella burrata (BU) ; et
- une configuration complètement fermée, de manière à amener les fromages de type mozzarella burrata (BU), une fois formés, à être coupés et par conséquent détachés d'une partie supérieure résiduelle excédentaire ou d'un nœud ; ou
- une configuration partiellement fermée, de manière à sceller les fromages de type mozzarella burrata (BU) tout en laissant une partie supérieure en forme de flocon ou une tête dans le fromage de type mozzarella burrata (BU) produit ;
dans laquelle les couvercles (53), associés aux trous (51) de la première station de formage (50-1), sont montés de manière pivotante sur une structure fixe (10') de la machine (10), de manière à être apte à pivoter entre une position fermée, dans laquelle les couvercles (53) ferment lesdits trous (51) et reçoivent et retiennent, dans les sièges (53') définis par les mêmes couvercles (53), les billes de mozzarella, les empêchant ainsi de tomber, et une position ouverte, dans laquelle les couvercles (53) ouvrent lesdits trous (51), de manière à libérer vers le bas depuis lesdits sièges (53') les fromages de type mozzarella burrata (BU) formés, détachés des vannes de type iris (52) dans la configuration fermée ;
dans laquelle les vannes de type iris (52), associés aux trous (51) de la seconde station de formage (50-2), sont chacune conçues pour prendre :
- une configuration complètement ouverte, appropriée pour permettre à la seconde unité de dosage (60-2), lorsqu'elle s'abaisse de la position relevée (P5) à la position abaissée (P6), de pousser, au moyen des buses respectives (61), les billes de mozzarella formées dans les cavités (41) du second groupe de cavités (41-2) du coulisseau (40) dans les sièges (53') définis par les couvercles (53) associés aux trous (51) de la seconde station de formage (50-2) ;
- une configuration partiellement ouverte, appropriée pour maintenir au sommet les billes de mozzarella disposées dans les sièges (53') de la seconde station de formage (50-2) pendant que la seconde unité de dosage (60-2) remplit, au moyen des buses respectives (61), les mêmes billes de mozzarella (M) avec une quantité dosée de garniture (RI) afin de les gonfler et de former les fromages de type mozzarella burrata (BU) ; et
- une configuration complètement fermée, de manière à amener les fromages de type mozzarella burrata (BU), une fois formés, à être coupés et par conséquent détachés d'une partie supérieure résiduelle excédentaire ou d'un nœud ; ou
- une configuration partiellement fermée, de manière à sceller les fromages de type mozzarella burrata (BU) tout en laissant une partie supérieure en forme de flocon ou une tête dans le fromage de type mozzarella burrata (BU) produit ;
dans laquelle les couvercles (53), associés aux trous (51) de la seconde station de formage (50-2), sont montés de manière pivotante sur une structure fixe (10') de la machine (10), de manière à être apte à pivoter entre une position fermée, dans laquelle les couvercles (53) ferment lesdits trous (51) et reçoivent et retiennent, dans les sièges (53') définis par les mêmes couvercles (53), les billes de mozzarella, les empêchant ainsi de tomber, et une position ouverte, dans laquelle les couvercles (53) ouvrent lesdits trous (51), de manière à libérer vers le bas depuis lesdits sièges (53') les fromages de type mozzarella burrata (BU) formés, détachées des vannes de type iris (52) dans la configuration fermée ;
dans laquelle la première unité de dosage (60-1), après avoir rempli les billes de mozzarella avec la garniture (RI) et l'avoir dosée, est conçue pour s'élever depuis la position abaissée (P4) de manière à éloigner les buses respectives (61) de la zone de la première station de formage (50-1), tandis qu'en même temps, les vannes de type iris (52) associées aux trous (51) de la première station de formage (50-1) prennent la configuration fermée pour provoquer le détachement des fromages de type mozzarella burrata (BU), leur permettant ainsi d'être libérés de la première station de formage (50-1) ; et
dans laquelle la seconde unité de dosage (60-2), après avoir rempli les billes de mozzarella avec la garniture (RI) et l'avoir dosée, est conçue pour s'élever depuis la position abaissée (P6) de manière à éloigner les buses respectives (61) de la zone de la seconde station de formage (50-2), tandis qu'en même temps, les vannes de type iris (52) associées aux trous (51) de la seconde station de formage (50-2) prennent la configuration fermée pour provoquer le détachement des fromages de type mozzarella burrata (BU), leur permettant ainsi d'être libérés de la seconde station de formage (50-2).

3. - Machine (10) selon une ou plusieurs des revendications précédentes, dans laquelle lesdits moyens de déchargement (80) comprennent une bande transporteuse (81) conçue pour recevoir depuis le dessus les fromages de type mozzarella burrata (BU), une fois formés et produits, provenant des première et seconde stations de formage (50-1, 50-2), et pour les transporter à l'extérieur de la machine (10) utilisée pour leur production.

4. - Machine (10) selon la revendication 3, dans laquelle ladite bande transporteuse (81) est conçue pour se déplacer verticalement entre :
- une position relevée (P7), adjacente aux trous (51) des première et seconde stations de formage (50-1, 50-2), pour recevoir les fromages de type mozzarella burrata (BU) depuis les sièges (53') définis par les couvercles (53) associés auxdits trous (51), lorsque lesdits couvercles (53) sont pivotés pour prendre la position ouverte respective ; et
- une position abaissée (P8), par rapport à ladite position relevée (P7), de manière à éloigner des première et seconde stations de formage (50-1, 50-2) les fromages de type mozzarella burrata (BU) reçus depuis lesdits sièges (53') définis par les couvercles rotatifs (53) des première et seconde stations de formage (50-1, 50-2) ;
dans laquelle ladite bande transporteuse (81), lorsqu'elle est disposée dans ladite position abaissée (P8), est conçue pour se déplacer par intermittence, en synchronisme avec les phases de formage des fromages de type mozzarella burrata (BU), afin de décharger de la machine (10) les fromages de type mozzarella burrata (BU) reçus depuis les première et seconde stations de formage (50-1, 50-2) et déposés sur ladite bande transporteuse (81) ; et
dans laquelle ladite bande transporteuse (81) comprend une pluralité de sièges (82), en particulier en forme de coupelles, conçus pour recevoir, depuis lesdits sièges (53') des première et seconde stations de formage (50-1, 50-2), les fromages de type mozzarella burrata (BU) formés et de les loger de manière stable afin qu'ils ne puissent pas tomber de la bande transporteuse (81) lorsqu'elle se déplace.

5. - Machine (10) selon l'une quelconque des revendications précédentes, dans laquelle le premier groupe de cavités (41-1) et le second groupe de cavités (41-2), sous la forme de trous traversants, du coulisseau (40) comprennent chacun six cavités (41),
dans laquelle la première station de formage (50-1) et la seconde station de formage (50-2) comprennent chacune six sièges (51), sous la forme de trous traversants, conçus pour recevoir et loger les billes de mozzarella formées dans les cavités (41) du coulisseau (40), et
dans laquelle la première unité de dosage (60-1) et la seconde unité de dosage (60-2) comprennent chacune six becs ou buses (61) destinés à remplir les billes de mozzarella disposées dans les sièges (51) des première (50-1) et seconde (50-2) stations de formage.

6. - Machine (10) selon l'une quelconque des revendications précédentes, dans laquelle ledit système d'alimentation et d'extrusion (30) est du type à vis.

7. - Machine (10) selon l'une quelconque des revendications précédentes, comprenant en outre une unité de pompage (70) réalisant la fonction de pompage et d'alimentation de la garniture (RI), sous la forme de stracciatella ou de crème, vers les première (60-1) et seconde (60-2) unités de dosage, afin de former et de produire les fromages de type mozzarella burrata (BU), ladite unité de pompage (70) comprenant à son tour :
- une trémie (71) conçue pour recevoir et être remplie de la garniture (RI),
- un système de pompage (72) comprenant une pluralité de pistons (72a), en particulier à commande électrique, conçus pour pomper et alimenter la garniture (RI) provenant de la trémie (71) vers les unités de dosage (60-1, 60-2) ; et
- un système de vanne (73), intercalé entre ladite trémie (71) et ledit système de pompage (72), destiné à commander de manière sélective l'alimentation de la garniture (RI), contenue dans la trémie (71), vers les pistons (72a) dudit système de pompage (72).

8. - Procédé de fabrication de fromage de type mozzarella burrata (BU), comprenant les étapes suivantes :
- fournir une machine (10) de production de fromage de type mozzarella burrata (BU) selon l'une quelconque des revendications 1 à 7 ; et
- déplacer de manière alternée le coulisseau (40), inclus dans ladite machine (10), entre deux positions de fonctionnement opposées (P1, P2), dans lesquelles le coulisseau (40) coopère avec la première station de formage (50-1) et la première unité de dosage (60-1) et, respectivement, avec la seconde station de formage (50-2) et la seconde unité de dosage (60-2) de ladite machine (10) afin de produire de manière cyclique un nombre donné de fromages de type burrata (BU).

9. - Procédé selon la revendication 8, comprenant en outre une étape consistant à décharger de manière alternée les fromages de type burrata produits dans ladite première station de formage (50-1) et dans ladite seconde station de formage (50-2).

10. - Procédé selon la revendication 9, dans lequel ladite étape de déchargement est effectuée en déplaçant de manière cyclique des moyens de déchargement appropriés (80, 81, 82) vers et à l'opposé desdites première (50-1) et seconde (50-2) stations de formage où les fromages de type burrata (BU) ont été formés et produits.
